# EUROPEAN PATENT APPLICATION

(11) **EP 4 703 406 A1**
(43) Date of publication of application: **04.03.2026**
(21) Application number: 24796952.0
(22) Date of filing: 19.04.2024
(51) Int. Cl.: C08G 65/336, B01J 31/22, C07F 15/00, C08K 3/013, C08L 63/00, C08L 71/02

(54) **HYDROLYZABLE SILYL GROUP-CONTAINING POLYOXYALKYLENE POLYMER, CURABLE COMPOSITION, AND CURED PRODUCT**

(30) Priority: 24.04.2023 JP 2023070768; 01.09.2023 JP 2023142466; 22.09.2023 JP 2023159272; 22.09.2023 JP 2023159273; 25.09.2023 JP 2023161523
(71) Applicant: Kaneka Corporation, Osaka-shi, Osaka 530-8288 (JP)
(72) Inventor: ONISHI, Yoshinobu, Hyogo, 676-8688 (JP)
(74) Representative: Vossius & Partner Patentanwälte Rechtsanwälte mbB
(86) International application number: PCT/JP2024/015651
(87) International publication number: WO 2024/225205

(57) **Abstract**

A polyoxyalkylene polymer contains a polyoxyalkylene polymer molecule having a hydrolyzable silyl group-containing structure represented by the following formula (1):

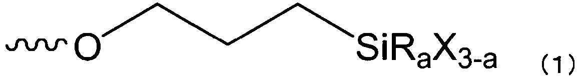

The proportion of the number of the hydrolyzable silyl group-containing structures represented by the formula (1), as measured relative to the total number of hydrolyzable silyl groups, I-propenyl groups, propyl groups, and allyl groups in the polymer, is from 0.85 to 1.00, and the polymer has a number-average molecular weight of more than 3,000. In the formula (1), R groups are the same or different and are each a substituted or unsubstituted monovalent hydrocarbon group having 1 to 20 carbon atoms, X groups are the same or different and are each a hydroxy group or a hydrolyzable group, and a is 0, 1, or 2.

## Description

### Technical Field

The present invention relates to a polyoxyalkylene polymer having a hydrolyzable silyl group, a curable composition containing the polymer, and a cured product of the composition.

### Background Art

A polyoxyalkylene polymer that has a silyl group having a hydroxy or hydrolyzable group on a silicon atom and capable of forming a siloxane bond (this silyl group will be hereinafter referred to as a "hydrolyzable silyl group") is known as a moisture-reactive polymer. Polymers of this type cure via hydrolysis to form flexible, rubber-like cured products and are therefore used in a wide range of industrial products such as sealing materials, adhesives, coating materials, paints, and pressure-sensitive adhesives.

A generally known method for obtaining a hydrolyzable silyl group-containing polyoxyalkylene polymer is to carry out hydrosilylation of an allyl group-containing polyoxyalkylene polymer with a hydrosilane compound in the presence of a metal catalyst. However, it is known that side reactions occur during the hydrosilylation, such as isomerization of the allyl groups into 1-propenyl groups (internal olefins) and hydrogenation of the allyl groups. This issue is common to all cases of hydrosilylation of allyl group-containing compounds in the presence of a metal catalyst. When a Karstedt catalyst (a platinum-divinyldisiloxane complex), which is a widely used catalyst, is employed in hydrosilylation of an allyl group-containing polymer, the above side reactions occur to an extent of approximately 20%, thereby limiting the degree of silyl group introduction. Consequently, a rubber-like cured product obtained by curing a curable composition containing the resulting hydrolyzable silyl group-containing polymer has room for improvement in properties such as modulus and tensile strength.

A known approach to increasing the degree of silyl group introduction is to carry out hydrosilylation of methallyl groups, rather than allyl groups, with a hydrosilane compound. Patent Literature 1 discloses that hydrosilylation of allyl groups results in a degree of silyl group introduction of around 80%, whereas hydrosilylation of methallyl groups increases the degree of silyl group introduction to 90 to 97%.

Patent Literature 2 or 3 discloses a hydrolyzable silyl group-containing polyoxyalkylene polymer in which the average proportion of the number of hydrolyzable silyl groups located at molecular chain ends to the number of molecular chain ends is 85% or more. This polymer achieves a degree of silyl group introduction of 85% or more as a result of hydrosilylation of a starting polymer having both methallyl and allyl groups.

Patent Literature 4 reports that hydrosilylation of an allyl ether compound with a hydrosilane compound in the presence of a specific ruthenium complex enables efficient production of the corresponding silylated derivative. However, this method is limited to producing silylated derivatives with molecular weights of up to 3,000. Increasing the molecular weight of the silylated derivative to be produced leads to a greater extent of side reactions and lower selectivity for the production of the silylated derivative.

### Citation List

### Patent Literature

PTL 1: WO 99/24489 A1
PTL 2: WO 2022/163563 A1
PTL 3: WO 2022/163562 A1
PTL 4: Japanese Laid-Open Patent Application Publication No. 2021-11456

### Summary of Invention

### Technical Problem

As taught in Patent Literatures 1 to 3, hydrosilylation of methallyl groups can achieve a degree of silyl group introduction of 85% or more, thereby enhancing strength after curing. However, the hydrolyzable silyl group-containing polymer obtained through hydrosilylation of methallyl groups tends to exhibit a slower rate of hydrolysis and condensation of the hydrolyzable silyl groups (i.e., the curing reaction) than polymers obtained through hydrosilylation of allyl groups. This is presumably because the hydrolyzable silyl group-containing polymer has methyl groups derived from methallyl groups in the vicinity of the silicon atom, and the steric hindrance of these methyl groups inhibits hydrolysis and condensation.

Although Patent Literature 4 reports that hydrosilylation of allyl groups enables efficient production of the corresponding silylated derivative, the method reported is limited to producing silylated derivatives with molecular weights of up to 3,000 and has difficulty achieving sufficient strength after curing.

As described above, it is difficult for the previously reported hydrolyzable silyl group-containing polyoxyalkylene polymers to achieve both high strength after curing and good curability at the same time.

In view of the above circumstances, the present invention aims to provide a hydrolyzable silyl group-containing polyoxyalkylene polymer capable of achieving both high strength after curing and good curability.

### Solution to Problem

As a result of intensive studies on hydrosilylation of an allyl group-containing polyoxyalkylene polymer with a hydrosilane compound, the present inventors have succeeded in suppressing side reactions such as isomerization of the allyl groups into 1-propenyl groups (internal olefins) and hydrogenation of the allyl groups and achieving a high degree of silyl group introduction, despite the high molecular weight of the allyl group-containing polyoxyalkylene polymer, and have found that the resulting hydrolyzable silyl group-containing polyoxyalkylene polymer with a high molecular weight has good curability and can exhibit high strength after curing. Based on this finding, the inventors have arrived at the present invention.

Specifically, the present invention relates to a polyoxyalkylene polymer (E) containing a polyoxyalkylene polymer molecule having a hydrolyzable silyl group-containing structure represented by the following formula (1): 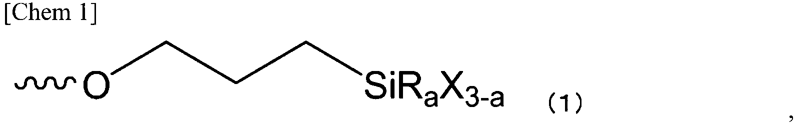
wherein R groups are the same or different and are each a substituted or unsubstituted monovalent hydrocarbon group having 1 to 20 carbon atoms, X groups are the same or different and are each a hydroxy group or a hydrolyzable group, and a is 0, 1, or 2, wherein
the proportion of the number of the hydrolyzable silyl group-containing structures represented by the formula (1), as measured relative to the total number of hydrolyzable silyl groups, 1-propenyl groups, propyl groups, and allyl groups in the polymer, is from 0.85 to 1.00, and
the polymer has a number-average molecular weight of more than 3,000.

The present invention also relates to a polymer mixture containing the polyoxyalkylene polymer (E) and a ruthenium complex (A).

The present invention further relates to a curable composition containing the polyoxyalkylene polymer (E) or the polymer mixture.

The present invention further relates to a curable composition containing the polyoxyalkylene polymer (E) or the polymer mixture and further containing a reinforcing filler.

The present invention further relates to a cured product obtained by curing the curable composition.

### Advantageous Effects of Invention

The present invention can provide a hydrolyzable silyl group-containing polyoxyalkylene polymer capable of achieving both high strength after curing and good curability. The present invention can further provide: a polymer mixture or curable composition containing the polymer; and a cured product obtained by curing the curable composition.

### Description of Embodiments

Hereinafter, an embodiment of the present invention will be described in detail.

A polyoxyalkylene polymer (E) according to the present embodiment contains a polymer molecule having a hydrolyzable silyl group-containing structure represented by the following formula (1).

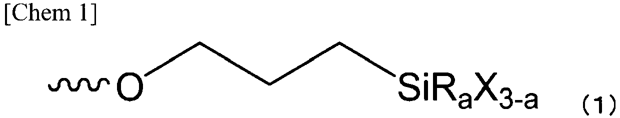

In the formula (1), the divalent group between the oxygen and silicon atoms is a trimethylene group having three carbon atoms and represented by -CH₂-CH₂-CH₂-. In the formula (1), the silicon atom is bonded to the unsubstituted trimethylene group. For this reason, steric hindrance that could inhibit the condensation reaction is minimal, allowing the polyoxyalkylene polymer (E) according to the present embodiment to achieve good curability. In addition, since the trimethylene group contains no unsaturated bonds, this group is highly stable.

As described later, such trimethylene groups are formed through hydrosilylation of allyl groups (CH₂=CH-CH₂-). In contrast, hydrosilylation of methallyl groups (CH₂=C(CH₃)-CH₂-) yields isobutylene groups with four carbon atoms (-CH₂-CH(CH₃)-CH₂-) rather than trimethylene groups, and thus the resulting hydrolyzable silyl group-containing structures do not correspond to the structure represented by the formula (1).

The polyoxyalkylene polymer (E) according to the present embodiment contains a high proportion of hydrolyzable silyl group-containing structures represented by the formula (1). Specifically, the proportion of the number of the hydrolyzable silyl group-containing structures represented by the formula (1), as measured relative to the total number of hydrolyzable silyl groups, 1-propenyl groups, propyl groups, and allyl groups in the polyoxyalkylene polymer (E) according to the present embodiment, is from 0.85 to 1.00. The high proportion of the hydrolyzable silyl group-containing structures represented by the formula (1) increases the crosslink density of the cured product, thereby enabling the cured product to exhibit high strength.

The term "hydrolyzable silyl groups" in the phrase "total number of hydrolyzable silyl groups, 1-propenyl groups, propyl groups, and allyl groups" is intended to include hydrolyzable silyl group-containing structures not represented by the formula (1), in addition to those represented by the formula (1).

The polyoxyalkylene polymer (E) according to the present embodiment may contain hydrolyzable silyl group-containing structures not represented by the formula (1), in addition to those represented by the formula (1). Preferably, the polyoxyalkylene polymer (E) does not contain any hydrolyzable silyl group-containing structures not represented by the formula (1).

The proportion of the hydrolyzable silyl group-containing structures represented by the formula (1) is preferably as high as possible. The proportion is preferably 0.90 or more, more preferably 0.95 or more, even more preferably 0.97 or more, and most preferably 0.98 or more.

The polyoxyalkylene polymer (E) according to the present embodiment can be produced by hydrosilylation of an allyl group-containing polyoxyalkylene polymer with a hydrosilane compound. In this hydrosilylation, allyl groups might isomerize to 1-propenyl groups (internal olefins) or be hydrogenated into propyl groups. In addition, some allyl groups might remain unreacted. Consequently, the resulting hydrolyzable silyl group-containing polyoxyalkylene polymer can contain at least one of 1-propenyl, propyl, and allyl groups in addition to the hydrolyzable silyl group-containing structures represented by the formula (1). In the polyoxyalkylene polymer (E) according to the present embodiment, the formation of 1-propenyl, propyl, and allyl groups is reduced, and the proportion of the hydrolyzable silyl group-containing structures represented by the formula (1) is controlled to be high.

Hydrosilylation of a methallyl group-containing polymer, such as the reaction described in Patent Literature 1, can achieve a high degree of silyl group introduction. However, the hydrolyzable silyl group-containing structures derived from methallyl groups in this reaction are not structures represented by the formula (1). Thus, the proportion of the hydrolyzable silyl group-containing structures represented by the formula (1) cannot reach 0.85 or more, as demonstrated by Comparative Examples described later.

Hydrosilylation of a polymer having both methallyl and allyl groups, such as the reaction described in Patent Literature 2 or 3, can also achieve a high degree of silyl group introduction. However, this reaction likewise yields hydrolyzable silyl group-containing structures derived from methallyl groups, which are not represented by the formula (1). Accordingly, the proportion of the hydrolyzable silyl group-containing structures represented by the formula (1) cannot reach 0.85 or more.

In summary, Patent Literatures 1 to 3 do not disclose any polymer in which the proportion of the hydrolyzable silyl group-containing structures represented by the formula (1) is 0.85 or more.

The proportion of the number of the hydrolyzable silyl group-containing structures represented by the formula (1) to the total number of hydrolyzable silyl groups, 1-propenyl groups, propyl groups, and allyl groups can be determined by ¹H NMR spectroscopy. The proportion is calculated based on the integrals of signals corresponding to the respective groups. For example, the hydrolyzable silyl group-containing polyoxyalkylene polymer may be dissolved in deuterated chloroform, and the resulting solution may be subjected to ¹H NMR spectroscopy. In this case, the peaks corresponding to hydrolyzable silyl groups, 1-propenyl groups, propyl groups, and allyl groups can be clearly distinguished. For instance, in the case of 3-(dimethoxymethylsilyl)propyloxy groups, which are an example of the hydrolyzable silyl group-containing structures represented by the formula (1), a peak attributed to two protons is observed at around 0.6 ppm. For 1-propenyl groups, multiple peaks attributed to a single proton are observed at around 5.9 to 6.3 ppm. For propyl groups, a peak attributed to three protons is observed at around 0.9 ppm. For allyl groups, two peaks attributed to two protons are observed at around 5.1 to 5.3 ppm. The proportion can be determined based on the integrals of these peaks.

The polyoxyalkylene polymer (E) according to the present embodiment is composed primarily of polyoxyalkylene polymer molecules having the hydrolyzable silyl group-containing structure represented by the formula (1). Each polymer molecule may further contain other groups selected from the group consisting of 1-propenyl, propyl, and allyl groups.

The polyoxyalkylene polymer (E) according to the present embodiment may consist solely of such polymer molecules. Alternatively, the polyoxyalkylene polymer (E) may further contain other polymer molecules listed below, provided that the proportion of the hydrolyzable silyl group-containing structures represented by the formula (1), as measured for the total polymer, satisfies the requirement described above.
- Polyoxyalkylene polymer molecules that do not have any hydrolyzable silyl group-containing structures represented by the formula (1) but have hydrolyzable silyl group-containing structures not represented by the formula (1).
- Polyoxyalkylene polymer molecules that have no hydrolyzable silyl groups but contain other groups selected from the group consisting of 1-propenyl, propyl, and allyl groups.

The oxygen atom on the left side of the formula (1) is bonded to the polymer backbone of the polyoxyalkylene polymer. The position at which the hydrolyzable silyl group-containing structure represented by the formula (1) is bonded to the polymer backbone is not limited to a particular site. The hydrolyzable silyl group-containing structure may be bonded to an end of the polymer backbone, an internal portion of the polymer backbone, or both. When the polyoxyalkylene polymer (E) according to the present embodiment is used as a curable resin for adhesives, sealing materials, elastic coating materials, or pressure-sensitive adhesives, the hydrolyzable silyl group-containing structure represented by the formula (1) is preferably bonded at least to an end of the polymer backbone. The hydrolyzable silyl group-containing structure represented by the formula (1) may be bonded exclusively to an end of the polymer backbone.

In the formula (1), R is a substituted or unsubstituted monovalent hydrocarbon group having 1 to 20 carbon atoms. When there are a plurality of R groups in the formula (1), they may be the same or different. The hydrocarbon group may be saturated or unsaturated, and may be aliphatic, alicyclic, or aromatic. The number of carbon atoms in the hydrocarbon group is preferably from 1 to 10, more preferably from 1 to 8, even more preferably from 1 to 6, still more preferably from 1 to 3, and particularly preferably 1 or 2. When the hydrocarbon group contains a substituent, examples of the substituent include, but are not limited to, halogen groups such as a chloro group, alkoxy groups such as a methoxy group, and amino groups such as an N,N-diethylamino group.

Examples of R include: unsubstituted alkyl groups such as methyl, ethyl, n-propyl, isopropyl, *n*-butyl, tert-butyl, n-hexyl, 2-ethylhexyl, and n-dodecyl groups; substituted alkyl groups such as chloromethyl, methoxymethyl, and *N*,*N-*diethylaminomethyl groups; unsaturated hydrocarbon groups such as vinyl, isopropenyl, and allyl groups; cycloalkyl groups such as a cyclohexyl group; aryl groups such as phenyl, toluyl, and 1-naphthyl groups; and aralkyl groups such as a benzyl group. R is preferably a substituted or unsubstituted alkyl group, more preferably a methyl, ethyl, chloromethyl, or methoxymethyl group, even more preferably a methyl or methoxymethyl group, and particularly preferably a methyl group. When a plurality of R groups are present, they may be the same or different.

In the formula (1), X is a hydroxy or hydrolyzable group. When there are a plurality of X groups in the formula (1), they may be the same or different. The hydrolyzable group is not limited to a particular type and may be a known hydrolyzable group. Examples include: a hydrogen atom; halogen atoms; and alkoxy, acyloxy, ketoximate, amino, amide, acid amide, aminooxy, mercapto, and alkenyloxy groups. Among these, alkoxy, acyloxy, ketoximate, and alkenyloxy groups are preferred. Alkoxy groups are more preferred in terms of moderate hydrolyzability and ease of handling. Methoxy and ethoxy groups are even more preferred, and particularly preferred is a methoxy group. When a plurality of X groups are present, they may be the same or different.

In the formula (1), a is 0, 1, or 2. In terms of curability, a is preferably 0 or 1.

Specific examples of -SiRₐX₃₋ₐ in the formula (1) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, (chloromethyl)dimethoxysilyl, (chloromethyl)diethoxysilyl, (methoxymethyl)dimethoxysilyl, (methoxymethyl)diethoxysilyl, (N,N-diethylaminomethyl)dimethoxysilyl, and (N,N-diethylaminomethyl)diethoxysilyl groups. Among these, dimethoxymethylsilyl, trimethoxysilyl, triethoxysilyl, and (methoxymethyl)dimethoxysilyl groups are preferred in order to obtain a cured product having good mechanical properties. In terms of activity, trimethoxysilyl, (chloromethyl)dimethoxysilyl, and (methoxymethyl)dimethoxysilyl groups are more preferred, and particularly preferred are trimethoxysilyl and (methoxymethyl)dimethoxysilyl groups. In terms of stability, dimethoxymethylsilyl and triethoxysilyl groups are more preferred, and particularly preferred is a dimethoxymethylsilyl group.

In terms of strength after curing, the average number of the hydrolyzable silyl group-containing structures represented by the formula (1) per molecule of the polyoxyalkylene polymer (E) according to the present embodiment is preferably 0.85 or more, more preferably 1.7 or more, even more preferably 1.8 or more, and particularly preferably 1.9 or more. The upper limit of the average number is not limited to a particular value. The average number is preferably up to 5, more preferably up to 4, and even more preferably up to 3.

The polyoxyalkylene polymer (E) according to the present embodiment has a polyoxyalkylene polymer backbone. The polymer backbone is preferably composed solely of oxyalkylene repeating units linked to one another. It is also preferable that the polymer backbone contain, in addition to the oxyalkylene repeating units, a structure derived from an initiator used for polymerization and be composed only of these components. The term "oxyalkylene repeating unit" as used herein refers to a repeating unit of a polyether. For example, the oxyalkylene repeating unit is an oxyalkylene unit having 2 to 6 carbon atoms, preferably 2 to 4 carbon atoms.

The polymer backbone may be linear or branched. A linear polymer backbone is preferred to achieve high elongation of the cured product of the curable composition, while a branched polymer backbone is preferred to achieve high strength of the cured product of the curable composition. A linear polymer backbone can be formed by using an initiator having one or two hydroxy groups per molecule in the polymerization process for forming the polymer backbone. A branched polymer backbone can be formed by using an initiator having three or more hydroxy groups per molecule. A polymer having a linear polymer backbone and a polymer having a branched polymer backbone may be used in combination.

Specific examples of the polyoxyalkylene polymer backbone include, but are not limited to, polyoxyethylene, polyoxypropylene, polyoxybutylene, polyoxytetramethylene, polyoxyethylene-polyoxypropylene copolymer, and polyoxypropylene-polyoxybutylene copolymer. Polyoxypropylene is preferred. One polymer backbone may be used alone, or two or more polymer backbones may be used in combination.

When the polyoxyalkylene polymer (E) according to the present embodiment is used as a curable resin for sealants or adhesives, the polymer (E) is preferably a polyoxypropylene polymer in which oxypropylene repeating units constitute 50 wt% or more, more preferably 80 wt% or more, of the polymer backbone. This is because such a polyoxypropylene polymer is amorphous and exhibits relatively low viscosity.

The polyoxyalkylene polymer (E) according to the present embodiment has a number-average molecular weight of more than 3,000 as determined by GPC as a polystyrene-equivalent molecular weight. By virtue of its relatively high molecular weight, the polymer (E) can exhibit good mechanical properties such as high tensile strength at break and high tensile elongation at break after curing. Accordingly, the polymer (E) is suitable for use as a curable resin for adhesives, sealing materials, elastic coating materials, or pressure-sensitive adhesives.

The number-average molecular weight is preferably 5,000 or more, more preferably 10,000 or more, and even more preferably 20,000 or more. The upper limit of the number-average molecular weight is not limited to a particular value. In terms of ease of handling, the number-average molecular weight is preferably up to 100,000, more preferably up to 60,000, and even more preferably up to 40,000.

The polyoxyalkylene polymer (E) according to the present embodiment is not limited to having a particular molecular weight distribution (Mw/Mn). The molecular weight distribution is preferably narrow, and the dispersity is preferably less than 2.0, more preferably 1.6 or less, even more preferably 1.5 or less, still more preferably 1.4 or less, and most preferably 1.2 or less. The molecular weight distribution of the polyoxyalkylene polymer (E) can be determined from the number-average and weight-average molecular weights obtained through GPC analysis.

### <Method for Producing Polyoxyalkylene Polymer (E) According to Present Embodiment>

Hereinafter, a specific example of a method for producing the polyoxyalkylene polymer (E) according to the present embodiment will be described in detail, although the method for producing the polyoxyalkylene polymer (E) is not limited to the example described below.

### (Polymerization)

The polymer backbone of the polyoxyalkylene polymer can be formed by a conventionally known method. Specifically, the polymer backbone can be formed by carrying out ring-opening polymerization of a cyclic ether compound using a polymerization catalyst in the presence of an initiator. This reaction yields a hydroxy-terminated polyoxyalkylene polymer (F). The polymerization is not limited to a specific method. However, a polymerization method using a double metal cyanide complex such as a zinc hexacyanocobaltate-glyme complex catalyst is preferred, as this method affords a hydroxy-terminated polymer having a narrow molecular weight distribution (i.e., a low dispersity Mw/Mn).

Examples of the cyclic ether compound include ethylene oxide, propylene oxide, butylene oxide, tetramethylene oxide, and tetrahydrofuran. One of these cyclic ether compounds may be used alone, or two or more thereof may be used in combination. Among the cyclic ether compounds, propylene oxide is particularly preferred for use to obtain an amorphous polyoxyalkylene polymer with relatively low viscosity.

Examples of hydroxy group-containing initiators include, but are not limited to: alcohols such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, and sorbitol; and hydroxy-terminated polyoxyalkylene polymers such as polyoxypropylene diol, polyoxypropylene triol, polyoxyethylene diol, and polyoxyethylene triol that have a number-average molecular weight of 300 to 4,000.

Examples of methods for polyoxyalkylene polymer synthesis include, but are not limited to: a polymerization method using an alkali catalyst such as KOH; a polymerization method taught in Japanese Laid-Open Patent Application Publication No. S61-215623, which uses a transition metal compound-porphyrin complex catalyst such as a complex obtained by a reaction of an organoaluminum compound and porphyrin; a polymerization method taught in Japanese Examined Patent Application Publication No. S46-27250, Japanese Examined Patent Application Publication No. S59-15336, U.S. Patent No. 3278457, U.S. Patent No. 3278458, U.S. Patent No. 3278459, U.S. Patent No. 3427256, U.S. Patent No. 3427334, or U.S. Patent No. 3427335, which uses a double metal cyanide complex catalyst; a polymerization method illustrated in Japanese Laid-Open Patent Application Publication No. H10-273512, which uses a catalyst made of a polyphosphazene salt; and a polymerization method illustrated in Japanese Laid-Open Patent Application Publication No. H11-060722, which uses a catalyst made of a phosphazene compound. The polymerization method using a double metal cyanide complex catalyst is more preferred, for example, in terms of production cost or for obtaining a polymer with a narrow molecular weight distribution.

### (Reaction with Alkali Metal Salt)

When introducing allyl groups into the hydroxy-terminated polyoxyalkylene polymer (F), it is preferable first to convert the terminal hydroxy groups into alkoxide groups by allowing an alkali metal salt to act on the hydroxy-terminated polyoxyalkylene polymer (F). A double metal cyanide complex catalyst may be used instead of the alkali metal salt.

Examples of the alkali metal salt include, but are not limited to, sodium hydroxide, sodium alkoxides, potassium hydroxide, potassium alkoxides, lithium hydroxide, lithium alkoxides, cesium hydroxide, and cesium alkoxides. In terms of ease of handling and solubility, preferred examples include sodium hydroxide, sodium methoxide, sodium ethoxide, sodium tert-butoxide, potassium hydroxide, potassium methoxide, potassium ethoxide, and potassium tert-butoxide, with sodium methoxide and sodium tert-butoxide being more preferred. Sodium methoxide is particularly preferred in terms of availability, and sodium tert-butoxide is particularly preferred in terms of reactivity. The alkali metal salt dissolved in a solvent may be used in the reaction.

The amount of the alkali metal salt used is not limited to a particular range. The molar ratio of the alkali metal salt to the hydroxy groups of the hydroxy-terminated polyoxyalkylene polymer (F) is preferably 0.5 or more, more preferably 0.6 or more, even more preferably 0.7 or more, and still more preferably 0.8 or more. The molar ratio is preferably 1.2 or less and more preferably 1.1 or less.

The alkali metal salt is used to convert the hydroxy groups of the hydroxy-terminated polyoxyalkylene polymer (F) into alkoxide groups. To allow this conversion reaction to proceed efficiently, it is preferable to remove water and hydroxy group-containing substances other than the polyoxyalkylene polymer from the reaction system prior to the reaction. The removal may be carried out using a known method, examples of which include evaporation under heating, distillation under reduced pressure, spray vaporization, thin-film evaporation, and azeotropic distillation.

The temperature at which the alkali metal salt is allowed to act on the polymer can be set as appropriate by those skilled in the art. The temperature is preferably from 50 to 150°C and more preferably from 110 to 145°C. The time during which the alkali metal salt is allowed to act on the polymer is preferably from 10 minutes to 5 hours and more preferably from 30 minutes to 3 hours.

### (Reaction with Allyl Group-Containing Organohalogen Compound (H))

After the alkali metal salt is allowed to act on the hydroxy-terminated polyoxyalkylene polymer (F) as described above, the resulting polymer is reacted with an allyl group-containing organohalogen compound (H). The allyl group-containing organohalogen compound (H) undergoes a halogen substitution reaction with the alkoxide groups to form ether bonds, thereby introducing allyl groups at the molecular chain ends of the polyoxyalkylene polymer. As a result, an allyl group-containing polyoxyalkylene polymer (C) can be formed.

Specific examples of the allyl group-containing organohalogen compound (H) include, but are not limited to, allyl chloride, allyl bromide, and allyl iodide. Allyl chloride is preferred in terms of ease of handling.

The amount of the allyl group-containing organohalogen compound (H) added is not limited to a particular range. The molar ratio of the organohalogen compound (H) to the hydroxy groups of the polyoxyalkylene polymer (F) is preferably 0.7 or more and more preferably 1.0 or more. The molar ratio is preferably 5.0 or less and more preferably 2.0 or less.

The temperature at which the polymer is reacted with the allyl group-containing organohalogen compound (H) is preferably from 50 to 150°C and more preferably from 110 to 140°C. The reaction time is preferably from 10 minutes to 5 hours and more preferably from 30 minutes to 3 hours.

### (Introduction of Hydrolyzable Silyl Groups)

The allyl group-containing polyoxyalkylene polymer (C) obtained as described above is subjected to hydrosilylation with a hydrolyzable silyl group-containing hydrosilane compound (D). As a result, the hydrolyzable silyl group-containing structures represented by the formula (1) can be introduced into the polymer.

Examples of hydrosilylation catalysts that can be used include, but are not limited to, metals such as iron, cobalt, nickel, iridium, platinum, palladium, rhodium, and ruthenium and complexes of these metals. However, the polyoxyalkylene polymer (E) according to the present embodiment, in which the proportion of the hydrolyzable silyl group-containing structures represented by the formula (1) is high, can be produced especially when the hydrosilylation is carried out in the presence of a ruthenium complex (A).

### <Hydrosilane Compound (D)>

The hydrosilane compound (D) is not limited to a particular structure but preferably has a structure represented by the following formula (2).

HSiRₐX₃₋ₐ (2)

In the formula (2), R, X, and a are as defined above for the formula (1).

Specific examples of such a hydrosilane compound (D) include trimethoxysilane, triethoxysilane, triphenoxysilane, tris(2-propenyloxy)silane, triacetoxysilane, dimethoxymethylsilane, diethoxymethylsilane, dimethoxyethylsilane, (chloromethyl)dimethoxysilane, (chloromethyl)diethoxysilane, (methoxymethyl)dimethoxysilane, (methoxymethyl)diethoxysilane, (N,N-diethylaminomethyl)dimethoxysilane, (N,N-diethylaminomethyl)diethoxysilane, diphenoxymethylsilane, methylsilane, dimethylsilane, trimethylsilane, ethylsilane, diethylsilane, triethylsilane, methyldiethylsilane, dimethylethylsilane, chlorodimethylsilane, dichloromethylsilane, phenylsilane, diphenylsilane, triphenylsilane, phenylmethylsilane, phenyldimethylsilane, diphenylmethylsilane, ethylphenylsilane, diethylphenylsilane, and ethyldiphenylsilane.

In terms of the curability and the strength after curing of the polyoxyalkylene polymer (E) according to the present embodiment, the hydrosilane compound (D) is particularly preferably trimethoxysilane or dimethoxymethylsilane.

The amount of the hydrosilane compound (D) used (i.e., the initially added amount), expressed as a molar amount relative to the allyl groups of the allyl group-containing polyoxyalkylene polymer (C), is preferably 1 molar equivalent or more, more preferably 3 molar equivalents or more, and even more preferably 5 molar equivalents or more. The molar amount is typically 20 molar equivalents or less and preferably 10 molar equivalents or less. When the amount of the hydrosilane compound (D) is in the above range, the viscosity of the resulting polyoxyalkylene polymer can be kept low, and the polyoxyalkylene polymer (E) obtained can exhibit good workability.

### <Ruthenium Complex (A)>

The ruthenium complex (A) is a ruthenium complex having a compound (B) as a ligand. Compared to known hydrosilylation catalysts such as a Karstedt catalyst (a platinum-divinyldisiloxane complex), the ruthenium complex (A) exhibits higher catalytic selectivity for the hydrosilylation of an allyl group-containing polyoxyalkylene polymer with a hydrosilane compound. Accordingly, the use of the ruthenium complex (A) can reduce the formation of 1-propenyl and propyl groups via side reactions, thereby enabling efficient production of the polyoxyalkylene polymer (E) in which the proportion of the hydrolyzable silyl group-containing structures represented by the formula (1) is high and which has a number-average molecular weight of more than 3,000.

The ruthenium complex (A) is not limited to a particular type and may be any ruthenium complex having the compound (B) as a ligand. The compound (B) that the ruthenium complex (A) has as a ligand may consist of a single type of compound or may be a combination of two or more different compounds.

The ruthenium complex (A) can be produced in accordance with a known production method. Examples of starting materials for the production of the ruthenium complex (A) include anhydrides and hydrates of compounds selected from ruthenium(III) chloride, ruthenium(III) bromide, and ruthenium(III) iodide. A specific exemplary method for producing the ruthenium complex (A) is to add the compound (B) to an ethanol solution of ruthenium(III) chloride hydrate, heat the resulting solution under reflux, and then perform filtration followed by drying. In the case of using ruthenium(III) chloride hydrate as a starting material, the heating under reflux may be performed in the presence of a base compound such as sodium carbonate or sodium hydrogen carbonate to neutralize hydrogen chloride generated during the heating under reflux. When ruthenium(III) chloride hydrate is reacted with the compound (B), it is preferable, in terms of the extent of reaction, to use 1 molar equivalent or more of the compound (B) per molar equivalent of the ruthenium compound serving as a starting material.

The ruthenium complex (A) may be a catalyst in the form of nanoparticles. The particle size (cumulative median diameter) of the nanoparticles of the ruthenium complex (A) is not limited to a particular range and may be any value that allows hydrosilylation to proceed to a desired extent. The particle size is preferably from 0.3 to 200 nm. The particle size is more preferably at least 0.5 nm and even more preferably at least 1 nm. The particle size is more preferably up to 100 nm, even more preferably up to 50 nm, and particularly preferably up to 10 nm. The cumulative median diameter can be measured using a transmission electron microscope (TEM).

The ruthenium complex (A) may have a compound (B') as a ligand in addition to the compound (B). The compound (B') is a compound that can coordinate with the ruthenium complex (A) and is not classified as a compound (B). Examples of the compound (B') that can serve as a ligand include 2,5-norbornadiene, 1,5-cyclooctadiene, p-cymene, mesitylene, benzene, carbonyl, isocyanide, and arene ligands.

When the ruthenium complex (A) has both the compound (B) and the compound (B') as ligands, the proportion of the compound (B) in the total ligands of the ruthenium complex (A) is preferably as high as possible in order for the ruthenium complex (A) to exhibit good selectivity. The proportion of the compound (B) in the total ligands is preferably from 1 to 100 mol%, more preferably from 50 to 100 mol%, even more preferably from 70 to 100 mol%, and still more preferably from 90 to 100 mol%.

The ruthenium complex (A) having the compound (B) as a ligand can be obtained also by the method described below, in which the compound (B) is added to a system containing a ruthenium compound (A') that does not have the compound (B) as a ligand, thereby converting the ruthenium compound (A') into the ruthenium complex (A).

### <Compound (B)>

The compound (B), which serves as a ligand of the ruthenium complex (A), is a compound capable of coordinating with ruthenium complexes. The compound (B) has at least one carbon-carbon double bond per molecule and contains an electron-withdrawing group bonded to at least one of the carbon atoms forming the carbon-carbon double bond.

The compound (B) has a basic skeleton containing the carbon-carbon double bond, and examples of the basic skeleton include norbornadiene, cyclooctadiene, benzene ring, and benzoquinone skeletons. Specific examples include 2,5-norbornadiene, 1,5-cyclooctadiene, p-cymene, mesitylene, benzene ring, and benzoquinone skeletons. The basic skeleton is preferably a norbornadiene or benzene ring skeleton.

Examples of the electron-withdrawing group include: halogen groups such as fluoro, chloro, bromo, and iodo groups; and cyano, aldehyde, and nitro groups. When the compound (B) contains a plurality of electron-withdrawing groups in the same molecule, the groups may be of different types.

The compound (B) may contain at least one electron-withdrawing group per molecule, but preferably contains two or more, more preferably two to four, particularly preferably two or three electron-withdrawing groups per molecule.

Preferred electron-withdrawing groups are halogen groups. Fluoro, bromo, and iodo groups are more preferred, with bromo and iodo groups being even more preferred. Particularly preferred is a bromo group. In particular, the compound (B) preferably contains at least one, more preferably two or more, electron-withdrawing groups selected from fluoro, bromo, and iodo groups per molecule. Even more preferably, the compound (B) contains at least one electron-withdrawing group selected from bromo and iodo groups per molecule. In this case, the compound (B) may further contain a fluoro group in addition to the bromo and/or iodo groups. These electron-withdrawing groups are preferably bonded directly to the carbon atoms forming the carbon-carbon double bonds of the compound (B). In particular, when the compound (B) has a benzene ring skeleton, the electron-withdrawing groups are preferably bonded directly to the benzene ring.

The structure of the compound (B) is composed of a combination of the basic skeleton and the electron-withdrawing groups. The compound (B) is not limited to a particular type. Examples of the compound (B) include: 2-bromonorbornadiene; 2,3-dibromonorbornadiene; 1,4-dibromobenzene and structural isomers thereof; 1-bromo-4-iodobenzene and structural isomers thereof; 1,3,5-tribromobenzene and structural isomers thereof; 1,2,4,5-tetrabromobenzene and structural isomers thereof; hexabromobenzene; 1-bromo-3,5-difluorobenzene and structural isomers thereof; 1-bromo-3,5-dichlorobenzene and structural isomers thereof; 1-bromo-3,5-diiodobenzene and structural isomers thereof; 1-bromo-3-chloro-5-fluorobenzene and structural isomers thereof; 1,4-diiodobenzene and structural isomers thereof; 1,3,5-triiodobenzene and structural isomers thereof; 1,2,4,5-tetraiodobenzene and structural isomers thereof; hexaiodobenzene; 1,3-difluoro-5-iodobenzene and structural isomers thereof; 1,3-dichloro-5-iodobenzene and structural isomers thereof; 1,3-dibromo-5-iodobenzene and structural isomers thereof; 1,3-dibromo-5-chlorobenzene and structural isomers thereof; 1-chloro-3,5-diiodobenzene and structural isomers thereof; 1-fluoro-3,5-dibromobenzene and structural isomers thereof; 1-fluoro-3,5-diiodobenzene and structural isomers thereof; 1-chloro-3-fluoro-5-iodobenzene and structural isomers thereof; 1-bromo-3-chloro-5-iodobenzene and structural isomers thereof; and 1-bromo-3-fluoro-5-iodobenzene and structural isomers thereof. In particular, in order to reduce the formation of by-products, the compound (B) is preferably 2,3-dibromonorbornadiene, 1,4-dibromobenzene, 1-bromo-3,5-difluorobenzene, 1-bromo-2,6-difluorobenzene, 1,3,5-tribromobenzene, 1,4-diiodobenzene, or hexabromobenzene and particularly preferably 2,3-dibromonorbornadiene, 1,4-dibromobenzene, 1-bromo-3,5-difluorobenzene, 1-bromo-2,6-difluorobenzene, 1,4-diiodobenzene, or 1,3,5-tribromobenzene. One compound (B) may be used alone, or two or more different compounds (B) may be used in combination.

The amount of the ruthenium complex (A) used (i.e., the initially added amount), expressed as a proportion by weight relative to the allyl group-containing polyoxyalkylene polymer (C), is typically 0.01 ppm or more, preferably 0.1 ppm or more, and more preferably 1 ppm or more, and is typically 10% or less, preferably 1% or less, and more preferably 0.1% or less. When the amount of the ruthenium complex (A) is in this range, the hydrolyzable silyl groups can be introduced efficiently.

The hydrosilylation may be carried out either in the presence of a solvent or without using any solvent. When a solvent is used, the solvent is not limited to a particular type. The solvent is preferably a compound with which the starting material or catalyst does not react. Specific examples include hydrocarbon solvents such as hexane and halogen solvents such as dichloromethane. The solvent is preferably dehydrated and deoxygenated before use.

The reaction temperature for the hydrosilylation can be chosen as appropriate in consideration of factors such as the reactivity (reaction rate) and the upper temperature limit of the reaction vessel. The reaction temperature is typically 0°C or higher, preferably 20°C or higher, and more preferably 40°C or higher, and is typically 200°C or lower and preferably 150°C or lower. The higher the reaction temperature, the shorter the time required for completion of the reaction can be, and the more reliably side reactions can be suppressed. The reaction time is not limited to a particular range and may be from about 5 minutes to about 12 hours or may be from about 10 minutes to about 5 hours.

The hydrosilylation is preferably performed under an atmosphere of an inert gas such as nitrogen or argon.

In the hydrosilylation, it is preferable to add and mix the compound (B) into the reaction system along with the addition of the ruthenium complex (A), as this can increase the proportion of the hydrolyzable silyl group-containing structures represented by the formula (1). A possible reason for the increase in the proportion of the silyl groups may be that the added compound (B) reacts with ruthenium(III) chloride remaining in the ruthenium complex (A) due to an insufficient amount of the compound (B) used in the synthesis of the ruthenium complex (A), and this reaction converts the ruthenium(III) chloride into the ruthenium complex (A). Thus, it is preferable to bring the ruthenium complex (A) and the compound (B) into contact before the onset of the hydrosilylation. For example, in a preferred embodiment, the allyl group-containing polyoxyalkylene polymer (C) introduced into the reaction vessel is stirred at a given temperature, the ruthenium complex (A) and the compound (B) are added and mixed with the allyl group-containing polyoxyalkylene polymer (C) under stirring, and the hydrosilane compound (D) is then added. The interval between the addition of the ruthenium complex (A) and the compound (B) and the addition of the hydrosilane compound (D) is not limited to a particular length of time and may be chosen as appropriate in consideration of factors such as the intended proportion of the silyl groups and the time required for production.

In another aspect, the polyoxyalkylene polymer (E) according to the present embodiment can be produced via hydrosilylation carried out by mixing the allyl group-containing polyoxyalkylene polymer (C), the hydrosilane compound (D), the ruthenium compound (A') that does not have the compound (B) as a ligand, and the compound (B).

According to this aspect, there is no need to synthesize the ruthenium complex (A) in advance as in the production method previously described. The ruthenium complex (A) is generated in the reaction system by mixing the ruthenium compound (A') and the compound (B) in the reaction vessel, and this complex functions as a catalyst. As a result, the hydrolyzable silyl group-containing polyoxyalkylene polymer (E) can be produced efficiently. The allyl group-containing polyoxyalkylene polymer (C), the hydrosilane compound (D), and the compound (B) are as described above. The mixing of the allyl group-containing polyoxyalkylene polymer (C), the hydrosilane compound (D), the ruthenium compound (A'), and the compound (B) is not limited to a particular order, and they can be mixed in any order.

### <Ruthenium Compound (A')>

The ruthenium compound (A') is not subject to any particular limitation, except that it does not have the compound (B) as a ligand. The ruthenium compound (A') may be ruthenium(III) chloride hydrate or a ruthenium complex having, as a ligand, a compound (B') that is not classified as a compound (B). Examples of the compound (B') include 2,5-norbornadiene, 1,5-cyclooctadiene, p-cymene, mesitylene, benzene, carbonyl, isocyanide, and arene ligands.

In order to reduce the formation of by-products, the ruthenium compound (A') is preferably a ruthenium complex having a ligand selected from 2,5-norbornadiene, benzene, and p-cymene ligands.

The conditions for the reaction step, such as the preferred amount of the hydrosilane compound (D) used (i.e., the initially added amount), the type of the solvent employed, and the preferred reaction temperature, are the same as those described above. The preferred amount of the ruthenium compound (A') used (i.e., the initially added amount) is the same as the above-described amount of the ruthenium complex (A) used (i.e., the initially added amount). This production method involves generating the ruthenium complex (A) in the reaction system by mixing the ruthenium compound (A') and the compound (B) in the reaction vessel. Thus, for example, it is preferable to introduce the allyl group-containing polyoxyalkylene polymer (C) into a reaction vessel, stir the polymer (C) at a given temperature, add the ruthenium compound (A') and the compound (B) to the polymer (C) under stirring, and then add the hydrosilane compound (D). The interval between the addition of the ruthenium complex (A') and the compound (B) and the addition of the hydrosilane compound (D) is not limited to a particular length of time and may be chosen as appropriate in consideration of factors such as the intended degree of silyl group introduction and the production time.

The amount of the compound (B) to be added is not limited to a particular range. The amount of the compound (B), expressed as a proportion by weight relative to the allyl group-containing polyoxyalkylene polymer (C), is typically 0.01 ppm or more, preferably 0.1 ppm or more, and more preferably 1 ppm or more, and is typically 10% or less, preferably 1% or less, and more preferably 0.1% or less.

When the hydrolyzable silyl group-containing polyoxyalkylene polymer (E) according to the present embodiment is produced by the production method described above, a polymer mixture containing the hydrolyzable silyl group-containing polyoxyalkylene polymer (E) and the ruthenium complex (A) can be obtained.

The amount of the ruthenium complex (A) in the polymer mixture corresponds to the above-described amount of the ruthenium complex (A) or ruthenium compound (A') used (i.e., the initially added amount). Specifically, the amount of the ruthenium complex (A), expressed as a proportion by weight relative to the hydrolyzable silyl group-containing polyoxyalkylene polymer (E), is typically 0.01 ppm or more, preferably 0.1 ppm or more, and more preferably 1 ppm or more, and is typically 10% or less, preferably 1% or less, and more preferably 0.1% or less.

### <Curable Composition>

The hydrolyzable silyl group-containing polyoxyalkylene polymer (E) according to the present embodiment or the polymer mixture containing the polymer (E) can be used as a component of a curable composition. The curable composition can be cured to obtain a cured product.

### (Polyoxyalkylene Polymer (E'))

The curable composition according to the present embodiment may contain, in addition to the polyoxyalkylene polymer (E), another hydrolyzable silyl group-containing polyoxyalkylene polymer (E') that does not fall within the definition of the polymer (E).

A particularly preferred example of the polymer (E') is a polymer that contains a polyoxyalkylene polymer molecule having a hydrolyzable silyl group-containing structure represented by the formula (1) and in which the proportion of the number of the hydrolyzable silyl group-containing structures represented by the formula (1), as measured relative to the total number of hydrolyzable silyl groups, 1-propenyl groups, propyl groups, and allyl groups in the polymer (E'), is from 0.05 to less than 0.85. The inclusion of such a polymer (E') imparts good curability to the curable composition and allows it to be formed into a cured product with low modulus. The curable composition which affords a low-modulus cured product, i.e., a highly flexible cured product, is particularly suitable for use as a sealing material.

The polyoxyalkylene polymer (E') is the same as the polyoxyalkylene polymer (E), except that its number-average molecular weight is not limited to being more than 3,000 and that the proportion of the hydrolyzable silyl group-containing structures represented by the formula (1) is from 0.05 to less than 0.85.

The main chain of the polyoxyalkylene polymer (E') may be linear or branched.

In order for the curable composition to exhibit excellent curability and afford a cured product with low modulus, the polyoxyalkylene polymer (E') preferably has a linear main chain and contains the hydrolyzable silyl group-containing structure at only one end of the linear main chain.

The number-average molecular weight of the polyoxyalkylene polymer (E') is not limited to a particular range but preferably 800 or more.

The upper limit of the number-average molecular weight of the polyoxyalkylene polymer (E') is not limited to a particular value. The number-average molecular weight is preferably less than 20,000 and more preferably less than 10,000.

To reduce the viscosity of the curable composition and make the curable composition easy to handle, the number-average molecular weight of the polyoxyalkylene polymer (E') is preferably lower than that of the polyoxyalkylene polymer (E).

A preferred combination of the polyoxyalkylene polymer (E) and the polyoxyalkylene polymer (E') is a combination in which the polyoxyalkylene polymer (E) has a number-average molecular weight of 20,000 to 100,000 and the polyoxyalkylene polymer (E') has a number-average molecular weight of 800 to less than 20,000.

In the polyoxyalkylene polymer (E'), the proportion of the number of the hydrolyzable silyl group-containing structures represented by the formula (1) to the total number of hydrolyzable silyl groups, 1-propenyl groups, propyl groups, and allyl groups is from 0.05 to less than 0.85, preferably from 0.10 to less than 0.85, more preferably from 0.30 to less than 0.85, even more preferably from 0.50 to less than 0.85, and particularly preferably from 0.70 to less than 0.85.

The production method of the polyoxyalkylene polymer (E') is not limited to a particular technique and may be any method that allows the proportion of the number of the hydrolyzable silyl group-containing structures represented by the formula (1) to fall within the range specified above.

The polyoxyalkylene polymer (E') can be produced through hydrosilylation of the allyl group-containing polyoxyalkylene polymer (C) with the hydrosilane compound (D) in the same manner as the polyoxyalkylene polymer (E), except that the production conditions are adjusted as appropriate to keep the proportion of the number of the hydrolyzable silyl group-containing structures represented by the formula (1) within the above range.

For example, the amount of residual allyl groups can be controlled by adjusting the amount of the hydrosilane compound (D) used, and thus the proportion of the number of the hydrolyzable silyl group-containing structures represented by the formula (1) can be adjusted.

When the hydrosilylation is carried out in the presence of a platinum catalyst as typified by a Karstedt catalyst, the proportion of the number of the hydrolyzable silyl group-containing structures represented by the formula (1) can be increased within the range of 0.10 to less than 0.85, and at the same time the amount of residual allyl groups can be reduced.

Specific examples of the platinum catalyst include: a catalyst composed of platinum supported on a support such as alumina, silica, or carbon black; chloroplatinic acid; a chloroplatinic acid complex composed of chloroplatinic acid and another compound such as an alcohol, an aldehyde, or a ketone; platinum-olefin complexes such as Pt(CH₂=CH₂)₂(PPh₃) and Pt(CH₂=CH₂)₂Cl₂]; platinum-divinyldisiloxane complexes such as Pt{(vinyl)Me₂SiOSiMe₂(vinyl)} (Karstedt catalyst) and Pt{Me(vinyl)SiO}₄; platinum-phosphine complexes such as Pt(PPh₃)₄ and Pt(PBu₃)₄; and platinum-phosphite complexes such as Pt{P(OPh)₃}₄.

The weight ratio between the polyoxyalkylene polymer (E) and the polyoxyalkylene polymer (E') is not limited to a particular range. For example, the weight ratio (E):(E') may range from 1:99 to 99:1. The weight ratio is preferably from 10:90 to 90:10, more preferably from 20:80 to 80:20, and even more preferably from 30:70 to 70:30.

When the polyoxyalkylene polymer (E) and the polyoxyalkylene polymer (E') are used in combination, the term "100 parts by weight of the polyoxyalkylene polymer (E)" as used herein is interchangeable with "100 parts by weight of the total amount of the polyoxyalkylene polymers (E) and (E')".

### (Curing Catalyst)

The curable composition according to the present embodiment preferably contains a curing catalyst to accelerate the hydrolysis-condensation reaction of hydrolyzable silyl groups, i.e., the curing reaction. This curing catalyst is also referred to as a condensation catalyst.

The curing catalyst used may be a conventionally known catalyst. Specific examples of curing catalysts that can be used include an organotin compound, a metal carboxylate, an amine compound, a carboxylic acid, an alkoxy metal, an inorganic acid, and a mixture thereof.

Specific examples of the organotin compound include dibutyltin dilaurate, dibutyltin dioctanoate, dibutyltin bis(butyl maleate), dibutyltin diacetate, dibutyltin oxide, dibutyltin bis(acetylacetonate), a reaction product of dibutyltin oxide and a silicate compound, a reaction product of dibutyltin oxide and a phthalic ester, dioctyltin diacetate, dioctyltin dilaurate, dioctyltin bis(ethyl maleate), dioctyltin bis(octyl maleate), dioctyltin bis(acetylacetonate), dioctyltin distearate, dioctyltin oxide, and a reaction product of dioctyltin oxide and a silicate compound. In view of recently heightened environmental awareness, dioctyltin compounds are preferred.

Specific examples of the metal carboxylate include tin carboxylate, bismuth carboxylate, titanium carboxylate, zirconium carboxylate, iron carboxylate, potassium carboxylate, and calcium carboxylate. The metal carboxylate may be a combination of any of the carboxylic acids mentioned below and any of various metals.

Specific examples of the amine compound include: amines such as octylamine, 2-ethylhexylamine, laurylamine, stearylamine, piperidine, 4-methylpiperidine, and hexamethyleneimine; nitrogen-containing heterocyclic compounds such as pyridine, 1,8-diazabicyclo[5,4,0]undec-7-ene (DBU), and 1,5-diazabicyclo[4,3,0]non-5-ene (DBN); guanidines such as guanidine, phenylguanidine, and diphenylguanidine; biguanides such as butyl biguanide, 1-o-tolyl biguanide, and 1-phenyl biguanide; and ketimine compounds.

Specific examples of the carboxylic acid include acetic acid, propionic acid, butyric acid, 2-ethylhexanoic acid, lauric acid, stearic acid, oleic acid, linoleic acid, neodecanoic acid, and versatic acid.

Specific examples of the alkoxy metal include: titanium compounds such as tetrabutyl titanate, titanium tetrakis(acetylacetonate), titanium ethyl acetoacetate, and diisopropoxytitanium bis(ethyl acetoacetate); aluminum compounds such as aluminum tris(acetylacetonate) and diisopropoxyaluminum ethyl acetoacetate; and zirconium compounds such as zirconium tetrakis(acetylacetonate).

Other curing catalysts that can be used include fluorine anion-containing compounds, photoacid generators, and photobase generators.

Two or more different curing catalysts may be used in combination. For example, the combined use of the amine compound and carboxylic acid as mentioned above or of the amine compound and alkoxy metal as mentioned above can provide a reactivity-enhancing effect.

The amount of the curing catalyst is preferably from 0.001 to 20 parts by weight, more preferably from 0.01 to 15 parts by weight, and particularly preferably from 0.01 to 10 parts by weight per 100 parts by weight of the hydrolyzable silyl group-containing polyoxyalkylene polymer (E) according to the present embodiment. A certain type of curing catalyst might, after curing of the curable composition, seep to or soil the surface of the cured product. In such a case, the amount of the curing catalyst used may be controlled within the range of 0.01 to 3.0 parts by weight to maintain a good surface condition of the cured product while preserving the curability of the composition.

Other additional components may be added to the curable composition according to the present embodiment. Examples of such components include a silicon compound, an adhesion promoter, a plasticizer, a solvent, a diluent, a silicate, a filler, an anti-sagging agent, an antioxidant, a light stabilizer, an ultraviolet absorber, a property modifier, a tackifying resin, an epoxy compound, a photocurable material, an oxygen-curable material, a surface modifier, another resin, a flame retardant, and a blowing agent. If necessary, various additives may be added to the curable composition according to the present embodiment to adjust the physical properties of the composition or the cured product. Examples of such additives include a curability modifier, a radical inhibitor, a metal deactivator, an antiozonant, a phosphorus-based peroxide decomposer, a lubricant, a pigment, and a fungicide.

### (Filler)

Various fillers may be incorporated into the curable composition according to the present embodiment. Examples of fillers include ground calcium carbonate, colloidal calcium carbonate, magnesium carbonate, diatomite, clay, talc, titanium oxide, silicic anhydride, hydrated silicic acid, ferric oxide, aluminum fines, zinc oxide, activated zinc oxide, PVC powder, PMMA powder, glass fibers or filaments, and reinforcing fillers.

Reinforcing fillers are commonly known as fillers for reinforcing rubber. Any known reinforcing filler may be used. The reinforcing filler improves the mechanical properties of the cured product, increasing its modulus and tensile strength at break. The reinforcing filler is used, for example, when the cured product serves as an automobile glass-sealing material that needs to have a certain level of strength.

Specific examples of the reinforcing filler include: carbon black materials such as channel black, furnace black, thermal black, lamp black, and acetylene black; and silica materials such as fumed silica, precipitated silica, crystalline silica, and molten silica. One of these materials may be used alone, or two or more thereof may be used in combination.

Examples of the carbon black materials include: Printex 30, Printex 25, HIBLACK 30, HIBLACK 10, HIBLACK 5L, HIBLACK 20L, and HIBLACK 30L(manufactured by Orion Engineered Carbons); MONARCH M430 and MONARCH M570 (manufactured by Cabot); Showblack N-219 and Showblack N-220 (manufactured by Showa Cabot); NITERON #200, NITERON #300, and HTC #SL (manufactured by Nippon Steel Chemical Carbon); Asahi #120, Asahi #55, Asahi #60, Asahi #70, Asahi Thermal, and Asahi #15 (manufactured by Ashahi Carbon Co., Ltd.); SEAST S (manufactured by Tokai Carbon); DIABLACK SA and DIABLACK N234 (manufactured by Mitsubishi Chemical); Statex N121 (manufactured by Columbia Carbon, Japan); HTC #20 (manufactured by Nippon Steel Chemical Carbon); Huber N-907 (manufactured by Huber); and DENKA BLACK (acetylene black manufactured by Denka).

Among these carbon black materials, carbon black having a small primary particle size is preferred. The primary particle size is preferably from 10 nm to 80 µm and more preferably from 15 nm to 50 µm.

One reinforcing filler may be used alone, or two or more different reinforcing fillers may be used in combination.

The amount of the filler used is preferably from 1 to 300 parts by weight and more preferably from 10 to 250 parts by weight per 100 parts by weight of the hydrolyzable silyl group-containing polyoxyalkylene polymer (E) according to the present embodiment.

Organic or inorganic balloons may be added to reduce the weight (or reduce the specific gravity) of the composition. Balloons are hollow spheres for use as a filler. Examples of the material of the balloons include inorganic materials such as glass, Shirasu, and silica and organic materials such as phenol resin, urea resin, polystyrene, and saran.

The amount of the balloons used is preferably from 0.1 to 100 parts by weight and more preferably from 1 to 20 parts by weight per 100 parts by weight of the hydrolyzable silyl group-containing polyoxyalkylene polymer (E) according to the present embodiment.

### (Adhesion Promoter)

An adhesion promoter can be added to the curable composition according to the present embodiment. The adhesion promoter added can be a silane coupling agent or a reaction product of the silane coupling agent.

Specific examples of the silane coupling agent include: amino group-containing silanes such as γ-aminopropyltrimethoxysilane, γ-aminopropylmethyldimethoxysilane, *N*-β-aminoethyl-γ-aminopropyltrimethoxysilane, *N*-β-aminoethyl-γ-aminopropylmethyldimethoxysilane, *N*-phenyl-γ-aminopropyltrimethoxysilane, and (2-aminoethyl)aminomethyltrimethoxysilane; isocyanate group-containing silanes such as γ-isocyanatopropyltrimethoxysilane, γ-isocyanatopropyltriethoxysilane, γ-isocyanatopropylmethyldimethoxysilane, α-isocyanatomethyltrimethoxysilane, and α-isocyanatomethyldimethoxymethylsilane; mercapto group-containing silanes such as γ-mercaptopropyltrimethoxysilane, γ-mercaptopropyltriethoxysilane, and γ-mercaptopropylmethyldimethoxysilane; and epoxy group-containing silanes such as γ-glycidoxypropyltrimethoxysilane and β-(3,4-epoxycyclohexyl)ethyltrimethoxysilane. Condensation products of various silane coupling agents can also be used such as a condensation product of an amino group-containing silane and a condensation product of an amino group-containing silane and another alkoxysilane. Reaction products of various silane coupling agents can also be used such as a reaction product of an amino group-containing silane and an epoxy group-containing silane and a reaction product of an amino group-containing silane and a (meth)acrylic group-containing silane. One of the adhesion promoters may be used alone, or two or more thereof may be used as a mixture.

The amount of the silane coupling agent used is preferably from 0.1 to 20 parts by weight and more preferably from 0.5 to 10 parts by weight per 100 parts by weight of the hydrolyzable silyl group-containing polyoxyalkylene polymer (E) according to the present embodiment.

### (Plasticizer)

The curable composition according to the present embodiment can further contain a plasticizer. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate; non-phthalic ester compounds such as 1,2-cyclohexanedicarboxylic acid diisononyl ester; aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters; phosphoric ester compounds; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate.

A polymeric plasticizer can also be used. Specific examples of the polymeric plasticizer include: vinyl polymers; polyester plasticizers; polyethers such as polyether polyols (e.g., polyethylene glycol and polypropylene glycol that have a number-average molecular weight of 500 or more) and derivatives resulting from conversion of the hydroxy groups of these polyether polyols into ester or ether groups; polystyrenes; polybutadiene; polybutene; polyisobutylene; butadiene-acrylonitrile; and polychloroprene. One plasticizer may be used alone, or two or more plasticizers may be used in combination.

The polymeric plasticizer does not need to have any reactive silyl group but may have a reactive silyl group. When the polymeric plasticizer has a reactive silyl group, it functions as a reactive plasticizer and is prevented from migrating out of the cured product. When the polymeric plasticizer has a reactive silyl group, the number of these groups is preferably 1 or less and more preferably 0.8 or less on average per molecule. In the case of using a plasticizer having a reactive silyl group, particularly an oxyalkylene polymer having a reactive silyl group, the number-average molecular weight of the polymer is preferably lower than that of the hydrolyzable silyl group-containing polyoxyalkylene polymer (E).

The amount of the plasticizer used is preferably from 5 to 150 parts by weight, more preferably from 10 to 120 parts by weight, and even more preferably from 20 to 100 parts by weight per 100 parts by weight of the hydrolyzable silyl group-containing polyoxyalkylene polymer (E) according to the present embodiment.

In one aspect of the present invention, in order for the curable composition according to the present embodiment to exhibit good curability and afford a cured product with low modulus, it is preferable that the curable composition contain the polyoxyalkylene polymer (E), a plasticizer, a filler, and a curing catalyst, the proportion of the polyoxyalkylene polymer (E) be from 5 to 20 wt%, the proportion of the plasticizer be from 5 to 65 wt%, the proportion of the filler be from 15 to 90 wt%, and the total proportion of the polyoxyalkylene polymer (E), the plasticizer, and the filler be from 80 to 100 wt%. These proportions are based on the total amount of components other than the curing catalyst in the curable composition.

The proportion of the polyoxyalkylene polymer (E) is more preferably from 7 to 18 wt%.

The proportion of the plasticizer is more preferably from 7 to 60 wt% and even more preferably from 10 to 50 wt%.

The proportion of the filler is more preferably from 20 to 80 wt% and even more preferably from 30 to 70 wt%.

The total proportion of the polyoxyalkylene polymer (E), the plasticizer, and the filler is more preferably from 85 to 100 wt% and even more preferably from 90 to 99 wt%.

### (Solvent and Diluent)

A solvent or diluent can be added to the curable composition according to the present embodiment. The solvent or diluent used is not limited to a particular compound and may be an aliphatic hydrocarbon, an aromatic hydrocarbon, an alicyclic hydrocarbon, a halogenated hydrocarbon, an alcohol, an ester, a ketone, or an ether. When a solvent or diluent is used, the boiling point of the solvent or diluent is preferably 150°C or higher, more preferably 200°C or higher, and particularly preferably 250°C or higher to avoid air pollution during indoor use of the composition. One of the solvents or diluents as mentioned above may be used alone, or two or more thereof may be used in combination.

### (Anti-Sagging Agent)

The curable composition according to the present embodiment may contain an anti-sagging agent added as necessary to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone, or two or more thereof may be used in combination.

The amount of the anti-sagging agent used is preferably from 0.1 to 20 parts by weight per 100 parts by weight of the hydrolyzable silyl group-containing polyoxyalkylene polymer (E) according to the present embodiment.

### (Antioxidant)

An antioxidant (anti-aging agent) can be used in the curable composition according to the present embodiment. The use of the antioxidant can enhance the weathering resistance of the cured product. Examples of the antioxidant include hindered phenol antioxidants, monophenol antioxidants, bisphenol antioxidants, and polyphenol antioxidants. Specific examples include: Irganox 245, Irganox 1010, Irganox 1035, Irganox 1076, Irganox 1135, Irganox 1330, and Irganox 1520 (all of which are manufactured by BASF); SONGNOX 1076 (manufactured by SONGWON); and BHT. The following hindered amine light stabilizers can also be used: Tinuvin 622LD, Tinuvin 144, Tinuvin 292, CHIMASSORB 944LD, and CHIMASSORB 119FL (all of which are manufactured by BASF); ADK STAB LA-57, ADK STAB LA-62, ADK STAB LA-67, ADK STAB LA-63, and ADK STAB LA-68 (all of which are manufactured by ADEKA Corporation); Sanol LS-2626, Sanol LS-1114, and Sanol LS-744 (all of which are manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 can also be used. Specific examples of antioxidants are mentioned also in Japanese Laid-Open Patent Application Publication No. H4-283259 or Japanese Laid-Open Patent Application Publication No. H9-194731.

The amount of the antioxidant used is preferably from 0.1 to 10 parts by weight and more preferably from 0.2 to 5 parts by weight per 100 parts by weight of the hydrolyzable silyl group-containing polyoxyalkylene polymer (E) according to the present embodiment.

### (Light Stabilizer)

A light stabilizer can be used in the curable composition according to the present embodiment. The use of the light stabilizer can prevent photooxidative degradation of the cured product. Examples of the light stabilizer include benzotriazole, hindered amine, and benzoate compounds. Particularly preferred are hindered amine compounds.

The amount of the light stabilizer used is preferably from 0.1 to 10 parts by weight and more preferably from 0.2 to 5 parts by weight per 100 parts by weight of the hydrolyzable silyl group-containing polyoxyalkylene polymer (E) according to the present embodiment.

### (Ultraviolet Absorber)

An ultraviolet absorber can be used in the curable composition according to the present embodiment. The use of the ultraviolet absorber can enhance the surface weathering resistance of the cured product. Examples of the ultraviolet absorber include benzophenone, benzotriazole, salicylate, substituted acrylonitrile, and metal chelate compounds. Particularly preferred are benzotriazole compounds, examples of which include those sold under the names of Tinuvin P, Tinuvin 213, Tinuvin 234, Tinuvin 326, Tinuvin 327, Tinuvin 328, Tinuvin 329, Tinuvin 571, Tinuvin 1600, and Tinuvin B75 (all of which are manufactured by BASF).

The amount of the ultraviolet absorber used is preferably from 0.1 to 10 parts by weight and more preferably from 0.2 to 5 parts by weight per 100 parts by weight of the hydrolyzable silyl group-containing polyoxyalkylene polymer (E) according to the present embodiment.

### (Property Modifier)

The curable composition according to the present embodiment may contain a property modifier added as necessary to adjust the tensile properties of the resulting cured product. Examples of the property modifier include, but are not limited to: alkylalkoxysilanes such as phenoxytrimethylsilane, methyltrimethoxysilane, dimethyldimethoxysilane, trimethylmethoxysilane, and n-propyltrimethoxysilane; arylalkoxysilanes such as diphenyldimethoxysilane and phenyltrimethoxysilane; alkylisopropenoxysilanes such as dimethyldiisopropenoxysilane, methyltriisopropenoxysilane, and γ-glycidoxypropylmethyldiisopropenoxysilane; trialkylsilyl borates such as tris(trimethylsilyl) borate and tris(triethylsilyl) borate; silicone varnishes; and polysiloxanes. The use of the property modifier can increase the hardness of the cured product of the curable composition according to the present embodiment or conversely decrease the hardness and increase the elongation at break of the cured product. One of the property modifiers as mentioned above may be used alone, or two or more thereof may be used in combination.

In particular, a compound hydrolyzable to form a compound having a monovalent silanol group in the molecule has the effect of decreasing the modulus of the cured product without aggravating the surface stickiness of the cured product. Particularly preferred is a compound the hydrolysis of which gives trimethylsilanol. Examples of the compound hydrolyzable to form a compound having a monovalent silanol group in the molecule include silicon compounds which are derivatives of alcohols such as hexanol, octanol, phenol, trimethylolpropane, glycerin, pentaerythritol, and sorbitol and the hydrolysis of which gives monosilanols. Specific examples include phenoxytrimethylsilane and tris((trimethylsiloxy)methyl)propane.

The amount of the property modifier used is preferably from 0.1 to 10 parts by weight and more preferably from 0.5 to 5 parts by weight per 100 parts by weight of the hydrolyzable silyl group-containing polyoxyalkylene polymer (E) according to the present embodiment.

### (Tackifying Resin)

The curable composition according to the present embodiment can contain a tackifying resin added as necessary for the purpose of enhancing the bond strength or adhesion of the curable composition to a substrate or for any other purpose. The tackifying resin is not limited to a particular type and may be a commonly used tackifying resin.

Specific examples of the tackifying resin include terpene resins, aromatic modified terpene resins, hydrogenated terpene resins, terpene-phenol resins, phenol resins, modified phenol resins, xylene-phenol resins, cyclopentadiene-phenol resins, coumarone-indene resins, rosin resins, rosin ester resins, hydrogenated rosin ester resins, xylene resins, low-molecular-weight polystyrene resins, styrene copolymer resins, styrene block copolymers, hydrogenated styrene block copolymers, petroleum resins (such as C5 hydrocarbon resins, C9 hydrocarbon resins, and C5-C9 hydrocarbon copolymer resins), hydrogenated petroleum resins, and DCPD resins. One of these resins may be used alone, or two or more thereof may be used in combination.

The amount of the tackifying resin used is preferably from 2 to 100 parts by weight, more preferably from 5 to 50 parts by weight, and even more preferably from 5 to 30 parts by weight per 100 parts by weight of the hydrolyzable silyl group-containing polyoxyalkylene polymer (E) according to the present embodiment.

### (Epoxy Compound)

The curable composition according to the present embodiment can further contain an epoxy compound. The incorporation of the epoxy compound enables the curable composition to exhibit good curability and afford a cured product with high tensile shear strength. The use of the epoxy compound can also enhance the recovery performance of the cured product. The number of epoxy groups in the epoxy compound is 1 or more and preferably 2 or more.

Preferred examples of the epoxy compound include: bisphenol epoxy resins such as bisphenol A, bisphenol F, bisphenol AD, and bisphenol S epoxy resins; hydrogenated derivatives of these bisphenol epoxy resins; glycidyl ester epoxy compounds; glycidyl amine epoxy compounds; alicyclic epoxy compounds; phenol novolac, cresol novolac, and naphthol novolac epoxy resins; urethane-modified epoxy resins; fluorinated epoxy resins; epoxidized rubber such as epoxidized polybutadiene; and brominated epoxy compounds such as tetrabromobisphenol A diglycidyl ether.

Among these, bisphenol A epoxy resins are preferred to form a cured product excellent in both strength and elongation.

The amount of the epoxy compound is not limited to a particular range and may be any value, provided that the desired effect is not diminished. The amount of the epoxy compound is preferably from 0.1 to 500 parts by weight, more preferably from 10 to 200 parts by weight, and even more preferably from 20 to 100 parts by weight per 100 parts by weight of the hydrolyzable silyl group-containing polyoxyalkylene polymer (E) according to the present embodiment.

When the amount of the epoxy compound used is in the above range, a cured product with satisfactory tensile shear strength tends to be formed, and the cured product is less likely to have low peel strength.

The following epoxy compounds can also be used: epoxidized unsaturated fats and oils, epoxidized unsaturated fatty acid esters, alicyclic epoxy compounds, epichlorohydrin derivatives, and mixtures of the derivatives. Specific examples include epoxidized soybean oil, epoxidized linseed oil, bis(2-ethylhexyl)-4,5-epoxycyclohexane-1,2-dicarboxylate (E-PS), epoxy octyl stearate, and epoxy butyl stearate. It is recommended to use these epoxy compounds in an amount of 0.5 to 50 parts by weight per 100 parts by weight of the hydrolyzable silyl group-containing polyoxyalkylene polymer (E) according to the present embodiment.

### <Epoxy-Curing Agent>

When the curable composition according to the present embodiment contains an epoxy compound, the composition preferably further contains an epoxy-curing agent for curing the epoxy compound.

The epoxy-curing agent may be any compound conventionally used as a curing agent for various epoxy compounds, provided that the desired effect is not diminished.

Specific examples of the epoxy-curing agent include chain aliphatic amine compounds, alicyclic amine compounds, aromatic amine compounds, polyaminoamide, imidazole, dicyandiamide, epoxy-modified amines, Mannich-modified amines, Michael addition-modified amines, ketimine, polycarboxylic anhydrides, alcohols, and phenols. One of these epoxy-curing agents may be used alone, or two or more thereof may be used in combination.

The amount of the epoxy-curing agent is not limited to a particular range. For rapid curing of the epoxy compound, the amount of the epoxy-curing agent is preferably from 0.1 to 300 parts by weight, more preferably from 1 to 200 parts by weight, and even more preferably from 5 to 100 parts by weight per 100 parts by weight of the epoxy compound.

### (Photocurable Material)

A photocurable material can be used in the curable composition according to the present embodiment. The use of the photocurable material can lead to the formation of a coating of the photocurable material on the surface of the cured product, resulting in reduction in the stickiness of the cured product or enhancement of the weathering resistance of the cured product. Many such compounds are known, including organic monomers, oligomers, resins, and compositions containing them. Typical examples of photocurable materials that can be used include: an unsaturated acrylic compound which is a monomer or an oligomer having one or more unsaturated acrylic or methacrylic groups or a mixture of the monomer and oligomer; polyvinyl cinnamates; and azide resins.

The amount of the photocurable material used is preferably from 0.1 to 20 parts by weight and more preferably from 0.5 to 10 parts by weight per 100 parts by weight of the hydrolyzable silyl group-containing polyoxyalkylene polymer (E) according to the present embodiment.

### (Oxygen-Curable Material)

An oxygen-curable material can be used in the curable composition according to the present embodiment. Examples of the oxygen-curable material include unsaturated compounds reactive with oxygen in the air. The oxygen-curable material reacts with oxygen in the air to form a cured coating in the vicinity of the surface of the cured product, thus offering benefits such as preventing the surface of the cured product from being sticky and preventing deposition of dirt and dust on the surface of the cured product. Specific examples of the oxygen-curable material include: drying oils exemplified by tung oil and linseed oil; various alkyd resins obtained by modification of the drying oil compounds; drying oil-modified acrylic polymers, epoxy resins, and silicone resins; and liquid polymers such as 1,2-polybutadiene, 1,4-polybutadiene, and C5 to C8 diene polymers which are obtained by polymerization or copolymerization of diene compounds such as butadiene, chloroprene, isoprene, and 1,3-pentadiene. One of these materials may be used alone, or two or more thereof may be used in combination.

The amount of the oxygen-curable material used is preferably from 0.1 to 20 parts by weight and more preferably from 0.5 to 10 parts by weight per 100 parts by weight of the hydrolyzable silyl group-containing polyoxyalkylene polymer (E) according to the present embodiment. As taught in Japanese Laid-Open Patent Application Publication No. H3-160053, it is recommended to use the oxygen-curable material in combination with a photocurable material.

### <<Preparation of Curable Composition>>

The curable composition according to the present embodiment can be prepared as a one-part composition all the components of which are blended together and hermetically stored and which, when applied to any object, cures under the action of moisture in the air. The curable composition may be prepared as a two-part composition consisting of a base material containing the polyoxyalkylene polymer (E) and a curing agent prepared separately from the base material by blending components such as a curing catalyst, a filler, a plasticizer, and water. In the case of this two-part composition, the base material and the curing agent are mixed before use. In terms of workability, it is preferable to prepare the curable composition as a one-part composition.

In an aspect where the curable composition contains an epoxy compound, the curable composition rapidly cures. Accordingly, when the curable composition is a one-part composition, it is preferable to prepare the curable composition at the worksite and use it immediately after preparation.

When the curable composition contains an epoxy compound but no epoxy-curing agent, the curable composition can be prepared as a two-part composition consisting of two separate parts one of which contains the polyoxyalkylene polymer (E) and the other of which contains the curing catalyst. In this case, for example, the curable composition may be a two-part curable composition consisting of: a base material containing the polyoxyalkylene polymer (E) and the epoxy compound; and a curing agent containing the curing catalyst. Alternatively, the curable composition may be a two-part curable composition consisting of a first material containing the polyoxyalkylene polymer (E) and a second material containing the epoxy compound and the curing catalyst.

When the curable composition contains an epoxy compound and further contains an epoxy-curing agent, the composition may be, for example, a two-part curable composition consisting of: a base material containing the polyoxyalkylene polymer (E) and the epoxy compound; and a curing agent containing the curing catalyst and the epoxy-curing agent. Alternatively, the composition may be a two-part curable composition consisting of a first material containing the polyoxyalkylene polymer (E) and the epoxy-curing agent and a second material containing the epoxy compound and the curing catalyst.

In such two-part curable compositions, components other than the polyoxyalkylene polymer (E), the epoxy compound, the curing catalyst, and the epoxy-curing agent may be contained in either part.

When the curable composition according to the present embodiment is a one-part composition, all the components are blended together in advance. Thus, it is preferable that a water-containing component be dried to remove water before use or dehydrated by means such as pressure reduction during blending or kneading. The storage stability of the curable composition can be further improved by not only performing the drying/dehydration but also adding an alkoxysilane compound such as methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane, or γ-glycidoxypropyltrimethoxysilane.

### <Applications>

The curable composition according to the present embodiment can be used as a pressure-sensitive adhesive, a sealing material for buildings, ships, automobiles, or roads, an adhesive, a waterproofing material, a coating-waterproofing material, a mold making material, a vibration-isolating material, a vibration-damping material, a soundproofing material, a foam material, a paint, or a spray material. A cured product obtained by curing the curable composition according to the present embodiment is superior in flexibility and adhesion. As such, the curable composition is suitable for use as a sealing material or an adhesive.

The curable composition according to the present embodiment can be used in various applications, including: a material for use in an electrical or electronic part, such as a sealant for the back side of a solar cell; an electrical insulating material for an electrical or electronic part or device, such as an insulating sheath material for an electric wire or a cable; an acoustic insulating material; an elastic adhesive; a binder; a contact adhesive; a spray-type sealing material; a crack-repairing material; an adhesive for tile laying; an adhesive for an asphalt-waterproofing material; a powder paint; a cast molding material; a rubber material for medical purposes; a pressure-sensitive adhesive for medical purposes; a pressure-sensitive adhesive sheet for medical purposes; a medical device sealing material; a dental impression material; a food packaging material; a joint sealing material for exterior cladding such as siding board; a coating material; an anti-skid covering material; a buffer material; a primer; an electrically conductive material for electromagnetic wave shielding; a thermally conductive material; a hot-melt material; a potting agent for electrical or electronic purposes; a film; a gasket; a concrete-reinforcing material; an adhesive for temporary bonding; any kind of molding material; a rust-proofing or waterproofing sealant for an edge face (cut edge) of wire glass or laminated glass; and a liquid sealing material for use in industrial parts such as parts of automobiles, large vehicles (e.g., cargo trucks and buses), railroad cars, aircrafts, ships, electric machines, and various other machines. For example, in an automobile, the curable composition can be used for diverse purposes, such as for adhesive mounting of various parts such as a plastic cover, a trim, a flange, a bumper, a window, and interior and exterior parts. Furthermore, the curable composition can, alone or with the help of a primer, adhere closely to a wide variety of substrates such as glass, porcelain, wood, metal, and a resin molded article, and thus can be used as any of various types of sealing compositions and adhesive compositions. In addition, the curable composition according to the present embodiment can be used as an adhesive for interior panels, an adhesive for exterior panels, an adhesive for tile laying, an adhesive for stone laying, an adhesive for ceiling finishing, an adhesive for floor finishing, an adhesive for wall finishing, an adhesive for vehicle panels, an adhesive for assembly of electrical, electronic, or precision equipment, an adhesive for bonding of leather, fiber products, fabric, paper, plates, or rubber, a reactive post-crosslinking pressure-sensitive adhesive, a sealing material for direct glazing, a sealing material for double-glazed glass, a sealing material for SSG, a sealing material for working joints of buildings, or a material for civil engineering or bridge construction. The curable composition can be used also as a pressure-sensitive adhesive material such as a pressure-sensitive adhesive tape or sheet.

In the following items, preferred aspects of the present disclosure are listed. The present invention is not limited to the following items.

### [Item 1]

A polyoxyalkylene polymer (E) containing a polyoxyalkylene polymer molecule having a hydrolyzable silyl group-containing structure represented by the formula (1) shown above, wherein R groups are the same or different and are each a substituted or unsubstituted monovalent hydrocarbon group having 1 to 20 carbon atoms, X groups are the same or different and are each a hydroxy group or a hydrolyzable group, and a is 0, 1, or 2, wherein
the proportion of the number of the hydrolyzable silyl group-containing structures represented by the formula (1), as measured relative to the total number of hydrolyzable silyl groups, 1-propenyl groups, propyl groups, and allyl groups in the polymer, is from 0.85 to 1.00, and
the polymer has a number-average molecular weight of more than 3,000.

### [Item 2]

The polyoxyalkylene polymer (E) according to item 1, wherein the proportion of the number of the hydrolyzable silyl group-containing structures represented by the formula (1), as measured relative to the total number of hydrolyzable silyl groups, 1-propenyl groups, propyl groups, and allyl groups in the polymer, is from 0.90 to 1.00.

### [Item 3]

The polyoxyalkylene polymer (E) according to item 1 or 2, wherein the hydrolyzable silyl groups, the 1-propenyl groups, and the propyl groups are groups derived from allyl groups during hydrosilylation.

### [Item 4]

The polyoxyalkylene polymer (E) according to any one of items 1 to 3, wherein the number-average molecular weight of the polymer is 10,000 or more.

### [Item 5]

The polyoxyalkylene polymer (E) according to item 4, wherein the number-average molecular weight of the polymer is 20,000 or more.

### [Item 6]

A polymer mixture containing the polyoxyalkylene polymer (E) according to any one of items 1 to 5 and a ruthenium complex (A).

### [Item 7]

The polymer mixture according to item 6, wherein
the ruthenium complex (A) has a compound (B) as a ligand,
the compound (B) contains at least one carbon-carbon double bond per molecule, and contains an electron-withdrawing group bonded to at least one of carbon atoms forming the carbon-carbon double bond.

### [Item 8]

The polymer mixture according to item 7, wherein the compound (B) has a benzene ring skeleton as a skeleton containing the carbon-carbon double bond.

### [Item 9]

The polymer mixture according to item 7, wherein the compound (B) has a norbornadiene skeleton as a skeleton containing the carbon-carbon double bond.

### [Item 10]

The polymer mixture according to any one of items 7 to 9, wherein the electron-withdrawing group is at least one group selected from the group consisting of fluoro, bromo, and iodo groups.

### [Item 11]

A curable composition containing the polyoxyalkylene polymer (E) according to any one of items 1 to 5 or the polymer mixture according to any one of items 6 to 10.

### [Item 12]

The curable composition according to item 11, further containing a reinforcing filler.

### [Item 13]

The curable composition according to item 11 or 12, further containing a plasticizer, a filler, and a curing catalyst, wherein
the proportion of the polyoxyalkylene polymer (E) to the total amount of components other than the curing catalyst in the curable composition is from 5 to 20 wt%,
the proportion of the plasticizer to the total amount of the components other than the curing catalyst in the curable composition is from 5 to 65 wt%,
the proportion of the filler to the total amount of the components other than the curing catalyst in the curable composition is from 15 to 90 wt%, and
the total proportion of the polyoxyalkylene polymer (E), the plasticizer, and the filler to the total amount of the components other than the curing catalyst in the curable composition is from 80 to 100 wt%.

### [Item 14]

The curable composition according to any one of items 11 to 13, further containing a polyoxyalkylene polymer (E') containing a polyoxyalkylene polymer molecule having a hydrolyzable silyl group-containing structure represented by the formula (1), wherein
in the polymer (E'), the proportion of the number of the hydrolyzable silyl group-containing structures represented by the formula (1), as measured relative to the total number of hydrolyzable silyl groups, 1-propenyl groups, propyl groups, and allyl groups in the polymer (E'), is from 0.05 to less than 0.85.

### [Item 15]

The curable composition according to item 14, wherein
the polyoxyalkylene polymer (E) has a number-average molecular weight of 20,000 to 100,000, and
the polyoxyalkylene polymer (E') has a number-average molecular weight of 800 to less than 20,000.

### [Item 16]

The curable composition according to item 14 or 15, wherein the polyoxyalkylene polymer (E) has a branched main chain.

### [Item 17]

The curable composition according to any one of items 14 to 16, wherein
the polyoxyalkylene polymer (E') has a linear main chain, and
the polyoxyalkylene polymer (E') contains the hydrolyzable silyl group-containing structure at only one end of the linear main chain.

### [Item 18]

The curable composition according to any one of items 11 to 17, further containing an epoxy compound.

### [Item 19]

The curable composition according to item 18, further containing an epoxy-curing agent.

### [Item 20]

A cured product obtained by curing the curable composition according to any one of items 11 to 19.

### Examples

Hereinafter, the present invention will be described in more detail using examples. The present invention is not limited to these examples.

The number-average molecular weights mentioned in the examples are GPC molecular weights measured under the following conditions.
Delivery system: HLC-8420 GPC manufactured by Tosoh Corporation
Column: TSKgel SuperH series manufactured by Tosoh Corporation
Solvent: THF (tetrahydrofuran)
Molecular weight: Polystyrene equivalent
Measurement temperature: 40°C

The proportions of hydrolyzable silyl, 1-propenyl, propyl, and allyl groups were determined by ¹H nuclear magnetic resonance (NMR) spectroscopy using the following NMR spectrometer.
Spectrometer: AVANCE III HD 500 (digital spectrometer manufactured by BRUKER)

### (Synthesis Example 1)

Propylene oxide was polymerized using polyoxypropylene glycol having a number-average molecular weight of about 4,500 as an initiator in the presence of a zinc hexacyanocobaltate-glyme complex catalyst. This polymerization yielded a hydroxy group-containing polyoxyalkylene polymer (F-1) terminated at both ends with hydroxy groups and having a number-average molecular weight of 27,600.

To the hydroxy group-containing polyoxyalkylene polymer (F-1) was added a 28% methanol solution of sodium methoxide the amount of which was 1.1 molar equivalents per molar equivalent of the hydroxy groups of the polymer (F-1). After methanol was distilled off under reduced pressure, allyl chloride was added in an amount of 1.3 molar equivalents per molar equivalent of the hydroxy groups of the polymer (F-1), and the reaction was allowed to proceed at 130°C for 1 hour. Allyl chloride was then distilled off under reduced pressure. The resulting unpurified allyl group-containing polyoxyalkylene polymer was mixed and stirred with n-hexane and water, and the mixture was centrifuged to remove water. Hexane was distilled off under reduced pressure from the resulting hexane solution, removing metal salts from the polymer. In this manner, an allyl group-containing polyoxyalkylene polymer (C-1) was obtained. The number-average molecular weight of this polymer was 27,600.

### (Example 1)

To the allyl group-containing polyoxyalkylene polymer (C-1) were added 48 ppm of [RuCl₂(nbd)]ₙ serving as the ruthenium compound (A') and 120 ppm of 2,3-dibromonorbornadiene serving as the compound (B), and the resulting mixture was stirred at 90°C for 10 minutes. Dimethoxymethylsilane was further added as the hydrosilane compound (D) (its amount was 5.0 molar equivalents per molar equivalent of the allyl groups of the polymer (C-1)), and hydrosilylation of the allyl groups of the polymer (C-1) was carried out at 90°C. ¹H NMR spectroscopy was performed every hour from the start of the reaction, and complete consumption of the allyl groups of the polymer (C-1) was confirmed 2 hours after the start of the reaction. Volatile components were distilled off under reduced pressure, giving a hydrolyzable silyl group-containing polyoxyalkylene polymer (E-1). The polymer backbone of the polymer (E-1) is linear.

The obtained polymer was analyzed by ¹H NMR spectroscopy to determine the proportions of hydrolyzable silyl, 1-propenyl, propyl, and allyl groups relative to the total amount of these groups. The proportion of hydrolyzable silyl group-containing structures represented by the formula (1) was 99%, while the proportions of 1-propenyl, propyl, and allyl groups were 0%, 1%, and 0%, respectively.

### (Comparative Example 1)

To the allyl group-containing polyoxyalkylene polymer (C-1) were added 50 ppm of a commercially-available Karstedt catalyst and dimethoxymethylsilane serving as the hydrosilane compound (D) (its amount was 5.0 molar equivalents per molar equivalent of the allyl groups of the polymer (C-1)), and hydrosilylation of the allyl groups of the polymer (C-1) was carried out at 90°C. ¹H NMR spectroscopy was performed every hour from the start of the reaction, and complete consumption of the allyl groups of the polymer (C-1) was confirmed 1 hour after the start of the reaction. Volatile components were distilled off under reduced pressure, giving a hydrolyzable silyl group-containing polyoxyalkylene polymer (E'-1).

The obtained polymer was analyzed by ¹H NMR spectroscopy to determine the proportions of hydrolyzable silyl, 1-propenyl, propyl, and allyl groups relative to the total amount of these groups. The proportion of hydrolyzable silyl group-containing structures represented by the formula (1) was 79%, while the proportions of 1-propenyl, propyl, and allyl groups were 20%, 1%, and 0%, respectively.

### (Comparative Example 2)

To the hydroxy group-containing polyoxyalkylene polymer (F-1) obtained in Synthesis Example 1 was added a 28% methanol solution of sodium methoxide the amount of which was 0.9 molar equivalents per molar equivalent of the hydroxy groups of the polymer (F-1). After methanol was distilled off under reduced pressure, 3-chloro-2-methyl-1-propene (methallyl chloride) was added in an amount of 1.2 molar equivalents per molar equivalents of the hydroxy groups of the polymer (F-1), and the reaction was allowed to proceed at 130°C for 1 hour to convert the terminal hydroxy groups into methallyl groups. Subsequently, 3-chloro-2-methyl-1-propene (methallyl chloride) was distilled off under reduced pressure. The distillation was followed by the addition of a 28% methanol solution of sodium methoxide the amount of which was 0.6 molar equivalents per molar equivalent of the hydroxy groups of the polymer (F-1). After methanol was distilled off under reduced pressure, 3-chloro-2-methyl-1-propene (methallyl chloride) was added in an amount of 0.7 molar equivalents per molar equivalent of the hydroxy groups of the polymer (F-1), and the reaction was allowed to proceed at 130°C for 1 hour to convert the remaining terminal hydroxy groups into methallyl groups. Subsequently, 3-chloro-2-methyl-1-propene (methallyl chloride) was distilled off under reduced pressure. The resulting unpurified methallyl group-containing polyoxyalkylene polymer was mixed and stirred with n-hexane and water, and the mixture was centrifuged to remove water. Hexane was distilled off under reduced pressure from the resulting hexane solution, removing metal salts from the polymer. In this manner, a methallyl group-containing polyoxyalkylene polymer (G-1) was obtained.

To the methallyl group-containing polyoxyalkylene polymer (G-1) were added 100 ppm of a Karstedt catalyst and 1000 ppm of 2,5-di-*t*-butyl-1,4-benzoquinone. Dimethoxymethylsilane was further added as the hydrosilane compound (D) (its amount was 1.5 molar equivalents per molar equivalent of the methallyl groups of the polymer (G-1)), and hydrosilylation of the methallyl groups of the polymer (G-1) was carried out at 100°C. ¹H NMR spectroscopy was performed every hour from the start of the reaction, and complete consumption of the methallyl groups of the polymer (G-1) was confirmed 6 hours after the start of the reaction. Volatile components were distilled off under reduced pressure, giving a hydrolyzable silyl group-containing polyoxyalkylene polymer (E'-2).

The obtained polymer was analyzed by ¹H NMR spectroscopy to determine the proportions of hydrolyzable silyl, 1-propenyl, propyl, and allyl groups relative to the total amount of these groups. The proportion of hydrolyzable silyl groups was 95%. However, most of the hydrolyzable silyl group-containing structures were those not represented by the formula (1) (hydrolyzable silyl group-containing structures containing an isobutylene group in place of the trimethylene group in the formula (1)), and the proportion of hydrolyzable silyl group-containing structures represented by the formula (1) was less than 85%.

### (Example 2)

A one-part curable composition was prepared using a 5-L planetary mixer (manufactured by Dalton Co., Ltd.) in accordance with the formulation shown in Table 1. First, 160 parts by weight of Ultra-Pflex (colloidal calcium carbonate, manufactured by Specialty Minerals), 54 parts by weight of Q3T (non-surface-treated ground calcium carbonate, manufactured by Huber), and 20 parts by weight of Ti-Pure R-902+ (titanium oxide, manufactured by Chemours) were dried under reduced pressure at 120°C for 2 hours. Next, 100 parts by weight of the hydrolyzable silyl group-containing polyoxyalkylene polymer (E-1) obtained in Example 1, 90 parts by weight of DINP (diisononyl phthalate, manufactured by J-PLUS Co., Ltd.), 2 parts by weight of Crayvallac SL (fatty acid amide wax, manufactured by ARKEMA), 1 part by weight of Tinuvin 328 (ultraviolet absorber, manufactured by BASF), and 1 part by weight of Tinuvin 770 (light stabilizer, manufactured by BASF) were added to the mixer, and the contents of the mixer were kneaded for 10 minutes. The resulting mixture was collected from the mixer and passed once through a three-roll mill to achieve uniform dispersion of the components. The mixture was then returned to the mixer and dehydrated under reduced pressure for 2 hours. After dehydration under reduced pressure, the mixture was cooled to below 50°C. To the cooled mixture were added 3 parts by weight of A-171 (vinyltrimethoxysilane, manufactured by Momentive), 3 parts by weight of A-1120 (*N*-(β-aminoethyl)-γ-aminopropyltrimethoxysilane, manufactured by Momentive), and 2 parts by weight of Neostann U-220H (dibutyltin bis(acetylacetonate), manufactured by Nitto Kasei Co., Ltd.), and the resulting mixture was then kneaded for 3 minutes. Subsequently, the mixture was degassed under reduced pressure for 2 minutes, after which the resulting mixture was immediately placed and sealed in a moisture-proof aluminum cartridge. In this manner, a curable composition was obtained.

### (Skinning Time)

In an atmosphere of 23°C and 50% relative humidity, an about 5-mm-thick mold was filled with the obtained curable composition using a spatula, and the surface of the curable composition was leveled. The moment at which the surface leveling was completed was defined as the curing start point. The time taken for the composition as the evaluation object to become non-sticky to the spatula touching the surface of the composition was measured as the skinning time. The result is shown in Table 1.

### (Dumbbell Tensile Properties)

A mold was filled with the obtained curable composition, which was then aged at 23°C and 50% relative humidity for 3 days and then at 50°C for 4 days to prepare a sheet-shaped cured product with a thickness of approximately 3 mm. The sheet-shaped cured product was punched to prepare a No. 3 dumbbell specimen. The specimen was subjected to tensile strength testing in an atmosphere of 23°C and 50% relative humidity to measure its modulus at 50% elongation (M50) and at 100% elongation (M100). The tensile strength at break (TB) and elongation at break (EB) were also measured. The measurement was performed using Autograph (AGS-J) manufactured by Shimadzu Corporation at a tensile speed of 200 mm/min. The results are shown in Table 1.

### (Tear Strength)

A 3-mm-thick sheet-shaped mold was filled with the obtained curable composition at 23°C and 50% relative humidity. The composition was cured at 23°C and 50% relative humidity for 3 days, after which it was aged in a 50°C dryer for 4 days, giving a sheet-shaped cured product. The obtained cured product was punched into the shape of a dumbbell specimen for tear testing (shape A as specified in JIS). The specimen was then subjected to tear testing using Autograph (tensile speed of 200 mm/min) at 23°C and 50% relative humidity to measure the tensile strength at break (TB). The result is shown in Table 1.

### (Tensile Shear Strength)

Aluminum plates were used as adherends. At 23°C and 50% relative humidity, the curable composition was applied to a 25 mm × 25 mm bonding area on the surface of an aluminum plate to a thickness of 50 µm. Two minutes after application, the aluminum plate and another aluminum plate with no curable composition applied were attached together by pressing the uncoated aluminum plate against the bonding area coated with the curable composition. The test specimen thus obtained was allowed to stand at a constant temperature of 23°C and a constant humidity of 50%. At the 1st, 3rd, and 24th hours after placement under the conditions of constant temperature and humidity, the specimen was subjected to tensile shear testing using Autograph (tensile speed of 50 mm/min) to measure the tensile strength at break (TB).

In addition, a test specimen obtained in the same manner was aged at 23°C and 50% relative humidity for 3 days and then at 50°C for 4 days, after which the aged specimen was subjected to tensile shear testing using Autograph to measure the tensile strength at break (TB).

The strength achievement rate at each testing time point was calculated using the following equation.

Strength achievement rate (%) = (Tensile strength at testing time point) ÷ (Tensile strength after 3-day aging at 23°C and 50% relative humidity followed by 4-day aging at 50°C) × 100

The results are shown in Table 1.

### (Comparative Example 3)

A curable composition was obtained in the same manner as in Example 2, except that 100 parts by weight of the hydrolyzable silyl group-containing polyoxyalkylene polymer (E'-1) obtained in Comparative Example 1 was used instead of 100 parts by weight of the hydrolyzable silyl group-containing polyoxyalkylene polymer (E-1). The obtained curable composition was used to evaluate skinning time, dumbbell tensile properties, tear strength, and tensile shear strength in the same manner as in Example 2. The results are shown in Table 1.

### (Comparative Example 4)

A curable composition was obtained in the same manner as in Example 2, except that 100 parts by weight of the hydrolyzable silyl group-containing polyoxyalkylene polymer (E'-2) obtained in Comparative Example 2 was used instead of 100 parts by weight of the hydrolyzable silyl group-containing polyoxyalkylene polymer (E-1). The obtained curable composition was used to evaluate skinning time, dumbbell tensile properties, tear strength, and tensile shear strength in the same manner as in Example 2. The results are shown in Table 1.

**[Table 1]**

| | | | Ex. 2 | Comp. 3 | Comp. 4 |
|---|---|---|---|---|---|
| Hydrolyzable silyl group-containing polymer | | | E-1 | E]-1 | E'-2 |
| Allyl group-containing polymer (C) as starting material | | | C-1 | C-1 | - |
| Methallyl group-containing polymer (G) as starting material | | | - | - | G-1 |
| Time required for hydrosilylation | | hr | 2 | 1 | 6 |
| Hydrolyzable silyl group-containing polymer | | E-1 | 100 | | |
| | | E'-1 | | 100 | |
| | | E'-2 | | | 100 |
| Plasticizer | | DINP | 90 | 90 | 90 |
| Filler | | Ultra-Pflex | 160 | 160 | 160 |
| | | Q3T | 54 | 54 | 54 |
| Titanium oxide | | Ti-Pure R902+ | 20 | 20 | 20 |
| Thixotropic agent | | Crayvallac SL | 2 | 2 | 2 |
| Ultraviolet absorber | | Tinuvin 328 | 1 | 1 | 1 |
| Light stabilizer | | Tinuvin 770 | 1 | | 1 |
| Dehydrating agent | | A-171 | 3 | 3 | 3 |
| Adhesion promoter | | A-1120 | 3 | 3 | 3 |
| Curing catalyst | | U-220H | 2 | 2 | 2 |
| Skinning time (min) | | | 35 | 52 | 95 |
| Dumbbell tensile properties | | M50 (MPa) | 0.53 | 0.27 | 0.56 |
| | | M100 (MPa) | 0.85 | 0.45 | 0.89 |
| | | TB (MPa) | 2.31 | 1.48 | 2.31 |
| | | EB (%) | 809 | 798 | 779 |
| Tear strength | TB (MPa) | TB (MPa) | 14.2 | 11.7 | 13.2 |
| Tensile shear strength | 23°C, 1 hr | TB (MPa) | 0.97 | 0.36 | 0.05 |
| | | Strength achievement rate | 27% | 16% | 1% |
| | 23°C, 3 hr | TB (MPa) | 1.53 | 1.25 | 1.18 |
| | | Strength achievement rate | 43% | 55% | 35% |
| | 23°C, 24 hr | TB (MPa) | 2.41 | 2.13 | 1.97 |
| | | Strength achievement rate | 68% | 93% | 58% |
| | 23°C, 3d + 50°C, 4d | TB (MPa) | 3.6 | 2.3 | 3.4 |

Table 1 reveals that the polyoxyalkylene polymer (E-1), in which the proportion of hydrolyzable silyl group-containing structures represented by the formula (1) is 85% or more, was obtained in a shorter hydrosilylation reaction time than the polyoxyalkylene polymer (E'-2) in which the total proportion of hydrolyzable silyl group-containing structures is 85% or more but the proportion of hydrolyzable silyl group-containing structures represented by the formula (1) is less than 85%.

The polyoxyalkylene polymer (E-1), in which the proportion of hydrolyzable silyl group-containing structures represented by the formula (1) is 85% or more, exhibited shorter skinning time and better curability than the polyoxyalkylene polymer (E'-1) in which the proportion of hydrolyzable silyl group-containing structures represented by the formula (1) is less than 85% and the polyoxyalkylene polymer (E'-2) in which the total proportion of hydrolyzable silyl group-containing structures is 85% or more but the proportion of hydrolyzable silyl group-containing structures represented by the formula (1) is less than 85%. The polyoxyalkylene polymer (E-1) also exhibited superior tear strength and tensile shear strength compared to the polymers (E'-1) and (E'-2). In a comparison of the increase in tensile shear strength over time, the tensile shear strength after 1 hour at 23°C was considerably higher for the polymer (E-1) than for the polymer (E'-2), and this improvement exceeded expectations.

In the dumbbell tensile testing, the hydrolyzable silyl group-containing polyoxyalkylene polymer (E-1) exhibited higher modulus and strength than the hydrolyzable silyl group-containing polyoxyalkylene polymer (E'-1), and the modulus and strength of the polymer (E-1) were comparable to those of the hydrolyzable silyl group-containing polyoxyalkylene polymer (E'-2).

### (Synthesis Example 2)

Propylene oxide was polymerized using polyoxypropylene triol having a number-average molecular weight of about 4,500 as an initiator in the presence of a zinc hexacyanocobaltate-glyme complex catalyst. This polymerization yielded a hydroxy group-containing polyoxyalkylene polymer (F-2) terminated at both ends with hydroxy groups and having a number-average molecular weight of 24,000.

To the hydroxy group-containing polyoxyalkylene polymer (F-2) was added a 28% methanol solution of sodium methoxide the amount of which was 1.1 molar equivalents per molar equivalent of the hydroxy groups of the polymer (F-2). After methanol was distilled off under reduced pressure, allyl chloride was added in an amount of 1.3 molar equivalents per molar equivalent of the hydroxy groups of the polymer (F-2), and the reaction was allowed to proceed at 130°C for 1 hour. Allyl chloride was then distilled off under reduced pressure. The resulting unpurified allyl group-containing polyoxyalkylene polymer was mixed and stirred with n-hexane and water, and the mixture was centrifuged to remove water. Hexane was distilled off under reduced pressure from the resulting hexane solution, removing metal salts from the polymer. In this manner, an allyl group-containing polyoxyalkylene polymer (C-2) was obtained. The number-average molecular weight of this polymer was 24,000.

### (Example 3)

To the allyl group-containing polyoxyalkylene polymer (C-2) were added 100 ppm of [RuCl₂(nbd)]ₙ serving as the ruthenium compound (A') and 260 ppm of 2,3-dibromonorbornadiene serving as the compound (B), and the resulting mixture was stirred at 110°C for 10 minutes. Dimethoxymethylsilane was further added as the hydrosilane compound (D) (its amount was 6.0 molar equivalents per molar equivalent of the allyl groups of the polymer (C-2)), and hydrosilylation of the allyl groups of the polymer (C-2) was carried out at 110°C. ¹H NMR spectroscopy was performed every hour from the start of the reaction, and complete consumption of the allyl groups of the polymer (C-2) was confirmed 1 hour after the start of the reaction. Volatile components were distilled off under reduced pressure, giving a hydrolyzable silyl group-containing polyoxyalkylene polymer (E-2). The polymer backbone of the polymer (E-2) is branched.

The obtained polymer was analyzed by ¹H NMR spectroscopy to determine the proportions of hydrolyzable silyl, 1-propenyl, propyl, and allyl groups relative to the total amount of these groups. The proportion of hydrolyzable silyl group-containing structures represented by the formula (1) was 98%, while the proportions of 1-propenyl, propyl, and allyl groups were 2%, 0%, and 0%, respectively.

### (Comparative Example 5)

To the allyl group-containing polyoxyalkylene polymer (C-2) were added 50 ppm of a commercially-available Karstedt catalyst and dimethoxymethylsilane serving as the hydrosilane compound (D) (its amount was 5.0 molar equivalents per molar equivalent of the allyl groups of the polymer (C-2)), and hydrosilylation of the allyl groups of the polymer (C-2) was carried out at 90°C. ¹H NMR spectroscopy was performed every hour from the start of the reaction, and complete consumption of the allyl groups of the polymer (C-2) was confirmed 1 hour after the start of the reaction. Volatile components were distilled off under reduced pressure, giving a hydrolyzable silyl group-containing polyoxyalkylene polymer (E'-3).

The obtained polymer was analyzed by ¹H NMR spectroscopy to determine the proportions of hydrolyzable silyl, 1-propenyl, propyl, and allyl groups relative to the total amount of these groups. The proportion of hydrolyzable silyl group-containing structures represented by the formula (1) was 80%, while the proportions of 1-propenyl, propyl, and allyl groups were 19%, 1%, and 0%, respectively.

### (Comparative Example 6)

To the hydroxy group-containing polyoxyalkylene polymer (F-2) obtained in Synthesis Example 2 was added a 28% methanol solution of sodium methoxide the amount of which was 0.9 molar equivalents per molar equivalent of the hydroxy groups of the polymer (F-2). After methanol was distilled off under reduced pressure, 3-chloro-2-methyl-1-propene (methallyl chloride) was added in an amount of 1.2 molar equivalents per molar equivalents of the hydroxy groups of the polymer (F-2), and the reaction was allowed to proceed at 130°C for 1 hour to convert the terminal hydroxy groups into methallyl groups. Subsequently, 3-chloro-2-methyl-1-propene (methallyl chloride) was distilled off under reduced pressure. The distillation was followed by the addition of a 28% methanol solution of sodium methoxide the amount of which was 0.6 molar equivalents per molar equivalent of the hydroxy groups of the polymer (F-2). After methanol was distilled off under reduced pressure, 3-chloro-2-methyl-1-propene (methallyl chloride) was added in an amount of 0.7 molar equivalents per molar equivalent of the hydroxy groups of the polymer (F-2), and the reaction was allowed to proceed at 130°C for 1 hour to convert the remaining terminal hydroxy groups into methallyl groups. Subsequently, 3-chloro-2-methyl-1-propene (methallyl chloride) was distilled off under reduced pressure. The resulting unpurified methallyl group-containing polyoxyalkylene polymer was mixed and stirred with n-hexane and water, and the mixture was centrifuged to remove water. Hexane was distilled off under reduced pressure from the resulting hexane solution, removing metal salts from the polymer. In this manner, a methallyl group-containing polyoxyalkylene polymer (G-2) was obtained.

To the methallyl group-containing polyoxyalkylene polymer (G-2) were added 100 ppm of a Karstedt catalyst and 1000 ppm of 2,5-di-*t*-butyl-1,4-benzoquinone. Dimethoxymethylsilane was further added as the hydrosilane compound (D) (its amount was 1.5 molar equivalents per molar equivalent of the methallyl groups of the polymer (G-2)), and hydrosilylation of the methallyl groups of the polymer (G-2) was carried out at 100°C. ¹H NMR spectroscopy was performed every hour from the start of the reaction, and complete consumption of the methallyl groups of the polymer (G-2) was confirmed 6 hours after the start of the reaction. Volatile components were distilled off under reduced pressure, giving a hydrolyzable silyl group-containing polyoxyalkylene polymer (E'-4).

The obtained polymer was analyzed by ¹H NMR spectroscopy to determine the proportions of hydrolyzable silyl, 1-propenyl, propyl, and allyl groups relative to the total amount of these groups. The proportion of hydrolyzable silyl groups was 97%. However, most of the hydrolyzable silyl group-containing structures were those not represented by the formula (1) (hydrolyzable silyl group-containing structures containing an isobutylene group in place of the trimethylene group in the formula (1)), and the proportion of hydrolyzable silyl group-containing structures represented by the formula (1) was less than 85%.

### (Example 4)

A one-part curable composition was prepared using a 5-L planetary mixer (manufactured by Dalton Co., Ltd.) in accordance with the formulation shown in Table 2. First, 160 parts by weight of Hakuenka CCR (precipitated calcium carbonate, manufactured by Shiraishi Calcium Kaisha, Ltd.), 54 parts by weight of Whiton SB (ground calcium carbonate, manufactured by Shiraishi Calcium Kaisha), and 5 parts by weight of Tipaque R820 (titanium oxide, manufactured by Ishihara Sangyo Kaisha, Ltd.) were dried under reduced pressure at 120°C for 2 hours. Next, 100 parts by weight of the hydrolyzable silyl group-containing polyoxyalkylene polymer (E-2) obtained in Example 3, 90 parts by weight of DINP (diisononyl phthalate, manufactured by J-PLUS Co., Ltd.), 2 parts by weight of Disparlon 6500 (fatty acid amide wax, manufactured by Kusumoto Chemicals, Ltd.), 1 part by weight of Tinuvin 326 (2-(3-tert-butyl-2-hydroxy-5-methylphenyl)-5-chlorobenzotriazole, manufactured by BASF), and 1 part by weight of Tinuvin 770 (light stabilizer, manufactured by BASF) were added to the mixer, and the contents of the mixer were kneaded for 10 minutes. The resulting mixture was collected from the mixer and passed once through a three-roll mill to achieve uniform dispersion of the components. The mixture was then returned to the mixer and dehydrated under reduced pressure for 2 hours. After dehydration under reduced pressure, the mixture was cooled to below 50°C. To the cooled mixture were added 3 parts by weight of A-171 (vinyltrimethoxysilane, manufactured by Momentive), 3 parts by weight of A-1120 (*N*-(β-aminoethyl)-γ-aminopropyltrimethoxysilane, manufactured by Momentive), and 2 parts by weight of Neostann U-220H (dibutyltin bis(acetylacetonate), manufactured by Nitto Kasei Co., Ltd.), and the resulting mixture was then kneaded for 3 minutes. Subsequently, the mixture was degassed under reduced pressure for 2 minutes, after which the resulting mixture was immediately placed and sealed in a moisture-proof aluminum cartridge. In this manner, a curable composition was obtained. The obtained curable composition was used to evaluate skinning time, dumbbell tensile properties, and tensile shear strength in the same manner as in Example 2. The results are shown in Table 2.

### (Comparative Example 7)

A curable composition was obtained in the same manner as in Example 4, except that 100 parts by weight of the hydrolyzable silyl group-containing polyoxyalkylene polymer (E'-3) obtained in Comparative Example 5 was used instead of 100 parts by weight of the hydrolyzable silyl group-containing polyoxyalkylene polymer (E-2). The obtained curable composition was used to evaluate skinning time, dumbbell tensile properties, and tensile shear strength in the same manner as in Example 4. The results are shown in Table 2.

### (Comparative Example 8)

A curable composition was obtained in the same manner as in Example 4, except that 100 parts by weight of the hydrolyzable silyl group-containing polyoxyalkylene polymer (E'-4) obtained in Comparative Example 6 was used instead of 100 parts by weight of the hydrolyzable silyl group-containing polyoxyalkylene polymer (E-2). The obtained curable composition was used to evaluate skinning time, dumbbell tensile properties, and tensile shear strength in the same manner as in Example 4. The results are shown in Table 2.

**[Table 2]**

| | | | Ex. 4 | Comp. 7 | Comp. 8 |
|---|---|---|---|---|---|
| Hydrolyzable silyl group-containing polymer | | | E-2 | E'-3 | E'-4 |
| Allyl group-containing polymer (C) as starting material | | | C-2 | C-2 | - |
| Methallyl group-containing polymer (G) as starting material | | | - | - | G-2 |
| Time required for hydrosilylation | | hr | 1 | 1 | 6 |
| Hydrolyzable silyl group-containing polymer | | E-2 | 100 | | |
| | | E'-3 | | 100 | |
| | | E'-4 | | | 100 |
| Plasticizer | | DINP | 90 | 90 | 90 |
| Filler | | Hakuenka CCR | 160 | 160 | 160 |
| | | Whiton SB | 54 | 54 | 54 |
| Titanium oxide | | Tipeque R820 | 5 | 5 | 5 |
| Thixotropic agent | | Disparlon #6500 | 2 | 2 | 2 |
| Ultraviolet absorber | | Tinuvin 326 | 1 | 1 | 1 |
| Light stabilizer | | Tinuvin 770 | 1 | 1 | 1 |
| Dehydrating agent | | A-171 | 3 | 3 | 3 |
| Adhesion promoter | | A-1120 | 3 | 3 | 3 |
| Curing catalyst | | U-220H | 2 | 2 | 2 |
| Skinning time (min) | | | 9 | 12 | 37 |
| Dumbbell tensile properties | | M50 (MPa) | 0.84 | 0.56 | 0.88 |
| | | M100 (MPa) | 1.18 | 0.88 | 1.24 |
| | | TB (MPa) | 1.96 | 2.09 | 2.01 |
| | | EB (%) | 368 | 591 | 354 |
| Tensile shear strength | 23°C, 1 hr | TB (MPa) | 1.11 | 1.08 | 0.84 |
| | | Strength achievement rate | 31% | 33% | 26% |
| | 23°C, 24 hr | TB (MPa) | 2.45 | 2.55 | 2.21 |
| | | Strength achievement rate | 68% | 77% | 67% |
| | 23°C, 3d + 50°C, 4d | TB (MPa) | 3.58 | 3.32 | 3.28 |

Table 2 reveals that the polyoxyalkylene polymer (E-2), in which the proportion of hydrolyzable silyl group-containing structures represented by the formula (1) is 85% or more, exhibited shorter skinning time and better curability than the polyoxyalkylene polymer (E'-3) in which the proportion of hydrolyzable silyl group-containing structures represented by the formula (1) is less than 85% and the polyoxyalkylene polymer (E'-4) in which the total proportion of hydrolyzable silyl group-containing structures is 85% or more but the proportion of hydrolyzable silyl group-containing structure represented by the formula (1) is less than 85%. The polyoxyalkylene polymer (E-2) also exhibited superior tensile shear strength compared to the polymers (E'-3) and (E'-4).

In the dumbbell tensile testing, the hydrolyzable silyl group-containing polyoxyalkylene polymer (E-2) exhibited higher modulus than the hydrolyzable silyl group-containing polyoxyalkylene polymer (E'-3), and the modulus of the polymer (E-2) was comparable to that of the hydrolyzable silyl group-containing polyoxyalkylene polymer (E'-4).

### (Synthesis Example 3)

Propylene oxide was polymerized using polyoxypropylene glycol having a number-average molecular weight of about 4,500 as an initiator in the presence of a zinc hexacyanocobaltate-glyme complex catalyst. This polymerization yielded a hydroxy group-containing polyoxyalkylene polymer (F-3) terminated at both ends with hydroxy groups and having a number-average molecular weight of 15,000.

### (Example 5)

A one-part curable composition was prepared using a 5-L planetary mixer (manufactured by Dalton Co., Ltd.) in accordance with the formulation shown in Table 3. First, 50 parts by weight of Hakuenka CCR (precipitated calcium carbonate, manufactured by Shiraishi Calcium Kaisha, Ltd.) and 70 parts by weight of Hiblack 10 (carbon black, manufactured by Orion Engineered Carbons) were dried under reduced pressure at 120°C for 2 hours. Next, 100 parts by weight of the hydrolyzable silyl group-containing polyoxyalkylene polymer (E-1) obtained in Example 1, 50 parts by weight of the hydroxy group-containing polyoxyalkylene polymer (F-3) obtained in Synthesis Example 3 (serving as a plasticizer), 1 part by weight of Tinuvin 326 (2-(3-tert-butyl-2-hydroxy-5-methylphenyl)-5-chlorobenzotriazole, manufactured by BASF), and 1 part by weight of Tinuvin 770 (light stabilizer, manufactured by BASF) were added to the mixer, and the contents of the mixer were kneaded for 10 minutes. The resulting mixture was collected from the mixer and passed once through a three-roll mill to achieve uniform dispersion of the components. The mixture was then returned to the mixer and dehydrated under reduced pressure for 2 hours. After dehydration under reduced pressure, the mixture was cooled to below 50°C. To the cooled mixture were added 3 parts by weight of A-171 (vinyltrimethoxysilane, manufactured by Momentive), 3 parts by weight of A-1120 (*N*-(β-aminoethyl)-γ-aminopropyltrimethoxysilane, manufactured by Momentive), and 2 parts by weight of Neostann U-220H (dibutyltin bis(acetylacetonate), manufactured by Nitto Kasei Co., Ltd.), and the resulting mixture was then kneaded for 3 minutes. Subsequently, the mixture was degassed under reduced pressure for 2 minutes, after which the resulting mixture was immediately placed and sealed in a moisture-proof aluminum cartridge. In this manner, a curable composition was obtained. The obtained curable composition was used to evaluate skinning time, dumbbell tensile properties, and tensile shear strength in the same manner as in Example 2. The results are shown in Table 3.

### (Comparative Example 9)

A curable composition was obtained in the same manner as in Example 5, except that 100 parts by weight of the hydrolyzable silyl group-containing polyoxyalkylene polymer (E'-2) obtained in Comparative Example 2 was used instead of 100 parts by weight of the hydrolyzable silyl group-containing polyoxyalkylene polymer (E-1). The obtained curable composition was used to evaluate skinning time, dumbbell tensile properties, and tensile shear strength in the same manner as in Example 5. The results are shown in Table 3.

**[Table 3]**

| | | | Ex. 5 | Comp. 9 |
|---|---|---|---|---|
| Hydrolyzable silyl group-containing polymer | | | E-1 | E'-2 |
| Allyl group-containing polymer (C) as starting material | | | C-1 | - |
| Methallyl group-containing polymer (G) as starting material | | | - | G-1 |
| Time required for hydrosilylation | | hr | 2 | 6 |
| Hydrolyzable silyl group-containing polymer | | E-1 | 100 | |
| | | E'-2 | | 100 |
| Plasticizer | | F-3 | 50 | 50 |
| Filler | | Hakuenka CCR | 50 | 50 |
| | | Hiblack 10 | 70 | 70 |
| Ultraviolet absorber | | Tinuvin 326 | 1 | 1 |
| Light stabilizer | | Tinuvin 770 | 1 | 1 |
| Dehydrating agent | | A-171 | 3 | 3 |
| Adhesion promoter | | A-1120 | 3 | 3 |
| Curing catalyst | | U-220H | 2 | 2 |
| Skinning time (min) | | | 22 | 76 |
| Dumbbell tensile properties | | M50 (MPa) | 1.17 | 1.27 |
| | | M100 (MPa) | 2.03 | 2.20 |
| | | TB (MPa) | 5.73 | 5.89 |
| | | EB (%) | 287 | 263 |
| Tensile shear strength | 23°C, 1 hr | TB (MPa) | 1.01 | 0.25 |
| | | Strength achievement rate | 17% | 4% |
| | 23°C, 3 hr | TB (MPa) | 1.33 | 1.04 |
| | | Strength achievement rate | 23% | 17% |
| | 23°C, 24 hr | TB (MPa) | 2.15 | 1.71 |
| | | Strength achievement rate | 36% | 27% |
| | 23°C, 3d + 50°C, 4d | TB (MPa) | 5.9 | 6.3 |

Table 3 reveals that the polyoxyalkylene polymer (E-1), in which the proportion of hydrolyzable silyl group-containing structures represented by the formula (1) is 85% or more, exhibited shorter skinning time and better curability than the polyoxyalkylene polymer (E'-2) in which the total proportion of hydrolyzable silyl group-containing structures is 85% or more but the proportion of hydrolyzable silyl group-containing structure represented by the formula (1) is less than 85%. The increase in tensile shear strength over time was also sharper for the polymer (E-1) than for the polymer (E'-2).

In Example 5, where carbon black was incorporated as a reinforcing filler into the curable composition, the cured product exhibited higher tensile strength at break (TB) in dumbbell tensile testing than those of Examples 2 and 4 in which the curable compositions did not contain any reinforcing filler. In tensile shear testing, the cured product of Example 5 exhibited higher tensile strength at break (TB) after 3-day aging at 23°C and after 4-day aging at 50°C, compared to those of Examples 2 and 4.

### (Examples 6 and 7 and Comparative Examples 10 and 11)

A one-part curable composition was prepared using a 5-L planetary mixer (manufactured by Dalton Co., Ltd.) in accordance with the formulation shown in Table 4. First, 160 parts by weight of Hakuenka CCR (precipitated calcium carbonate, manufactured by Shiraishi Calcium Kaisha, Ltd.), 54 parts by weight of Whiton SB (ground calcium carbonate, manufactured by Shiraishi Calcium Kaisha), and 5 parts by weight of Tipaque R820 (titanium oxide, manufactured by Ishihara Sangyo Kaisha, Ltd.) were dried under reduced pressure at 120°C for 2 hours. Next, a hydrolyzable silyl group-containing polyoxyalkylene polymer (its type and amount are shown in Table 4), DINP (diisononyl phthalate, manufactured by J-PLUS Co., Ltd.; its amount is shown in Table 4), 2 parts by weight of Disparlon 6500 (fatty acid amide wax, manufactured by Kusumoto Chemicals, Ltd.), 1 part by weight of Tinuvin 326 (2-(3-tert-butyl-2-hydroxy-5-methylphenyl)-5-chlorobenzotriazole, manufactured by BASF), and 1 part by weight of Tinuvin 770 (light stabilizer, manufactured by BASF) were added to the mixer, and the contents of the mixer were kneaded for 10 minutes. The resulting mixture was collected from the mixer and passed once through a three-roll mill to achieve uniform dispersion of the components. The mixture was then returned to the mixer and dehydrated under reduced pressure for 2 hours. After dehydration under reduced pressure, the mixture was cooled to below 50°C. To the cooled mixture were added 3 parts by weight of A-171 (vinyltrimethoxysilane, manufactured by Momentive), 3 parts by weight of A-1120 (*N-*(β-aminoethyl)-γ-aminopropyltrimethoxysilane, manufactured by Momentive), and 2 parts by weight of Neostann U-220H (dibutyltin bis(acetylacetonate), manufactured by Nitto Kasei Co., Ltd.), and the resulting mixture was then kneaded for 3 minutes. Subsequently, the mixture was degassed under reduced pressure for 2 minutes, after which the resulting mixture was immediately placed and sealed in a moisture-proof aluminum cartridge. In this manner, a curable composition was obtained. The obtained curable composition was used to evaluate skinning time, dumbbell tensile properties, and tensile shear strength in the same manner as in Example 2. The results are shown in Table 4.

### <Viscosity>

The viscosity of each curable composition was measured in accordance with JIS K 7117-1 using a BS-type rotary viscometer (manufactured by Tokyo Keiki Inc.) equipped with a No. 7 rotor. The measurement temperature was 25°C, and the rotational speed was 10 rpm. The results are shown in Table 4.

**[Table 4]**

| | | | Ex. 6 | Ex. 7 | Comp. 10 | Comp. 11 |
|---|---|---|---|---|---|---|
| Hydrolyzable silyl group-containing polymer | | | E-2 | E-2 | E'-4 | E'-4 |
| Allyl group-containing polymer (C) as starting material | | | C-2 | C-2 | - | - |
| Methallyl group-containing polymer (G)as starting material | | | - | - | G-2 | G-2 |
| Hydrolyzable silyl group-containing polymer | | E-2 | 50 | 100 | | |
| | | E'-4 | | | 50 | 100 |
| Plasticizer | | DINP | 140 | 90 | 140 | 90 |
| Filler | | Hakuenka CCR | 160 | 160 | 160 | 160 |
| | | Whiton SB | 54 | 54 | 54 | 54 |
| Titanium oxide | | Tipeque R820 | 5 | 5 | 5 | 5 |
| Thixotropic agent | | Disparlon #6500 | 2 | 2 | 2 | 2 |
| Ultraviolet absorber | | Tinuvin 326 | 1 | 1 | 1 | 1 |
| Light stabilizer | | Tinuvin 770 | 1 | 1 | 1 | 1 |
| Dehydrating agent | | A-171 | 3 | 3 | 3 | 3 |
| Adhesion promoter | | A-1120 | 3 | 3 | 3 | 3 |
| Curing catalyst | | U-220H | 2 | 2 | 2 | 2 |
| Proportion of hydrolyzable silyl group-containing polymer to total amount of components other than curing catalyst (wt%) | | | 11.9 | 23.9 | 11.9 | 23.9 |
| Proportion of plasticizer to total amount of components other than curing catalyst (wt%) | | | 33.4 | 21.5 | 33.4 | 21.5 |
| Proportion of filler to total amount of components other than curing catalyst (wt%) | | | 51.1 | 51.1 | 51.1 | 51.1 |
| Viscosity | | (Pa•s) | 176 | 360 | 172 | 329 |
| Skinning time (min) | | | 13 | 9 | 72 | 37 |
| Dumbbell tensile properties | | M50 (MPa) | 0.34 | 0.84 | 0.34 | 0.88 |
| | | M100 (MPa) | 0.58 | 1.18 | 0.59 | 1.24 |
| | | TB (MPa) | 1.29 | 1.96 | 1.36 | 2.01 |
| | | EB (%) | 518 | 368 | 555 | 354 |
| Tensile shear strength | 23°C, 1 hr | TB (MPa) | 0.76 | 1.11 | 0.07 | 0.84 |
| | | Strength achievement rate | 35% | 31% | 3% | 26% |
| | 23°C, 24 hr | TB (MPa) | 1.95 | 2.45 | 1.68 | 2.21 |
| | | Strength achievement rate | 90% | 68% | 70% | 67% |
| | 23°C, 3d + 50°C, 4d | TB (MPa) | 2.17 | 3.58 | 2.40 | 3.28 |

Table 4 reveals that the curable compositions of Examples 6 and 7, each of which contained a polyoxyalkylene polymer (E), a plasticizer, and a filler, exhibited shorter skinning time and better curability than those of Comparative Examples 11 and 12. In particular, the curable composition of Example 6, which contained the plasticizer and the filler in given proportions, not only exhibited good curability but also offered excellent workability due to its low viscosity and afforded a cured product with low modulus.

Furthermore, the tensile shear strength measurement results demonstrate that the curable composition of Example 6 offered the advantage of exhibiting high tensile shear strength at an early stage of curing.

### (Example 8 and Comparative Examples 12 and 13)

In accordance with the formulation shown in Table 5, A-1120 (*N*-β-(aminoethyl)-γ-aminopropyltrimethoxysilane, manufactured by Momentive) serving as an adhesion promoter and Ancamine K54 (2,4,6-tris(dimethylaminomethyl)phenol, manufactured by Anchor Chemicals) serving as an epoxy-curing agent were added to a polyoxyalkylene polymer. These components were thoroughly mixed using a spatula to obtain Material A. Next, Neostann U-220H (dibutyltin bis(acetylacetonate), manufactured by Nitto Kasei Co., Ltd.) serving as a curing catalyst was added to EP 828 (bisphenol A epoxy resin, manufactured by Mitsubishi Chemical Corporation) serving as an epoxy compound, and they were thoroughly mixed using a spatula to obtain Material B. Materials A and B were mixed, and the resulting mixture was stirred and degassed using a planetary mixer (manufactured by Thinky Corporation under the trade name of Awatori Rentaro), thereby yielding a curable composition. The obtained curable composition was used to evaluate skinning time, dumbbell tensile properties, and tensile shear strength in the same manner as in Example 2. The results are shown in Table 5.

**[Table 5]**

| | | | Ex. 8 | Comp. 12 | Comp. 13 |
|---|---|---|---|---|---|
| Hydrolyzable silyl group-containing polymer | | | E-1 | E'-1 | E'-2 |
| Allyl group-containing polymer (C) as starting material | | | C-1 | C-1 | - |
| Methallyl group-containing polymer (G) as starting material | | | - | - | G-1 |
| Material A | Polymer (E) | E-1 | 70 | | |
| | Polymer (E') for comparison | E'-1 | | 70 | |
| | Polymer (E') for comparison | E'-2 | | | 70 |
| | Epoxy-curing agent | Ancamine K54 | 7 | 7 | 7 |
| | Adhesion promoter | A1120 | 2 | 2 | 2 |
| Material B | Epoxy compound | EP828 | 30 | 30 | 30 |
| | Curing catalyst | U-220H | 2 | 2 | 2 |
| Skinning time | | min | 8 | 10 | 15 |
| Dumbbell tensile properties | | M50 (MPa) | 1.0 | 0.6 | 1.2 |
| | | M100 (MPa) | 1.6 | 1.0 | 1.8 |
| | | TB (MPa) | 10.7 | 9.9 | 12.0 |
| | | EB (%) | 449 | 628 | 457 |
| Tensile shear strength | 23°C, 3 hr | MPa | 5.3 | 3.9 | 3.9 |
| | 23°C, 24 hr | MPa | 8.0 | 4.4 | 6.6 |
| | 23°C, 3d + 50°C, 4d | MPa | > 9.3 Aluminum substrates were elongated without break | 7.1 | 9.0 |

Table 5 reveals that the curable composition of Example 8, which contained the polyoxyalkylene polymer (E) in combination with an epoxy compound, exhibited better curability than those of Comparative Examples 12 and 13. It is also seen that the cured product of Example 8 had higher tensile shear strength than those of Comparative Examples 12 and 13.

### (Synthesis Example 4)

Propylene oxide was polymerized using butanol as an initiator in the presence of a zinc hexacyanocobaltate-glyme complex catalyst. This polymerization yielded a hydroxy group-containing polyoxyalkylene polymer (F-4) terminated at only one end with a hydroxy group and having a number-average molecular weight of 7,800.

To the polymer (F-4) was added a 28% methanol solution of sodium methoxide the amount of which was 0.75 molar equivalents per molar equivalent of the hydroxy groups of the polymer (F-4). After methanol was distilled off under reduced pressure from the resulting mixture, allyl chloride was added in an amount of 1.3 molar equivalents per molar equivalents of the hydroxy groups of the polymer (F-4), and the reaction was allowed to proceed at 130°C for 1 hour. Allyl chloride remaining unreacted was then distilled off under reduced pressure from the reaction solution.

To the polymer (F-4) was then added a 28% methanol solution of sodium methoxide the amount of which was 0.47 molar equivalents per molar equivalent of the hydroxy groups of the polymer (F-4). After methanol was distilled off under reduced pressure at 130°C from the resulting mixture, allyl chloride was added in an amount of 2.1 molar equivalents per molar equivalents of the hydroxy groups of the polymer (F-4), and the reaction was allowed to proceed at 130°C for 2 hours. Allyl chloride remaining unreacted was then distilled off under reduced pressure from the reaction solution. The resulting unpurified allyl group-containing polyoxypropylene polymer was mixed and stirred with n-hexane and water, and the mixture was centrifuged to remove water. Hexane was distilled off under reduced pressure from the resulting hexane solution, removing metal salts from the polymer. In this manner, an allyl group-containing polyoxyalkylene polymer (C-3) terminated at only one end with an allyl group was obtained.

To the polymer (C-3) were added a commercially-available Karstedt catalyst the amount of which was 50 ppm by weight based on the weight of the polymer (C-3) and dimethoxymethylsilane the amount of which was 1.0 molar equivalents per molar equivalent of the allyl groups of the polymer (C-3). Hydrosilylation of the allyl groups of the polymer (C-3) with dimethoxymethylsilane was carried out at 90°C. ¹H NMR spectroscopy was performed every hour from the start of the reaction, and complete consumption of the allyl groups of the polymer (C-3) was confirmed 2 hours after the start of the reaction. Volatile components were then distilled off under reduced pressure from the mixture, giving a polyoxyalkylene polymer (E'-5) having a linear backbone terminated at only one end with a hydrolyzable silyl group.

The obtained polymer (E'-5) was analyzed by ¹H NMR spectroscopy to determine the proportions of the numbers of hydrolyzable silyl, 1-propenyl, propyl, and allyl groups relative to the total number of these groups.

The result was that the proportion of hydrolyzable silyl group-containing structures represented by the formula (1) was 80%, while the proportions of I-propenyl, propyl, and allyl groups were 20%, 0%, and 0%, respectively.

### (Example 9)

A one-part curable composition was prepared using a 5-L planetary mixer (manufactured by Dalton Co., Ltd.) in accordance with the formulation shown in Table 6. First, 160 parts by weight of Hakuenka CCR (precipitated calcium carbonate, manufactured by Shiraishi Calcium Kaisha, Ltd.), 54 parts by weight of Whiton SB (ground calcium carbonate, manufactured by Shiraishi Calcium Kaisha), and 5 parts by weight of Tipaque R820 (titanium oxide, manufactured by Ishihara Sangyo Kaisha, Ltd.) were dried under reduced pressure at 120°C for 2 hours. Next, 60 parts by weight of the polyoxyalkylene polymer (E-1) obtained in Example 1, 40 parts by weight of the polyoxyalkylene polymer (E'-5) obtained in Synthesis Example 4, 90 parts by weight of DINP (diisononyl phthalate, manufactured by J-PLUS Co., Ltd.), 2 parts by weight of Disparlon 6500 (fatty acid amide wax, manufactured by Kusumoto Chemicals, Ltd.), 1 part by weight of Tinuvin 326 (2-(3-*tert*-butyl-2-hydroxy-5-methylphenyl)-5-chlorobenzotriazole, manufactured by BASF), and 1 part by weight of Tinuvin 770 (light stabilizer, manufactured by BASF) were added to the mixer, and the contents of the mixer were kneaded for 10 minutes. The resulting mixture was collected from the mixer and passed once through a three-roll mill to achieve uniform dispersion of the components. The mixture was then returned to the mixer and dehydrated under reduced pressure for 2 hours. After dehydration under reduced pressure, the mixture was cooled to below 50°C. To the cooled mixture were added 3 parts by weight of A-171 (vinyltrimethoxysilane, manufactured by Momentive), 3 parts by weight of A-1120 (*N*-(β-aminoethyl)-γ-aminopropyltrimethoxysilane, manufactured by Momentive), and 2 parts by weight of Neostann U-220H (dibutyltin bis(acetylacetonate), manufactured by Nitto Kasei Co., Ltd.), and the resulting mixture was then kneaded for 3 minutes. Subsequently, the mixture was degassed under reduced pressure for 2 minutes, after which the resulting mixture was immediately placed and sealed in a moisture-proof aluminum cartridge. In this manner, a curable composition was obtained. The obtained curable composition was used to evaluate skinning time, dumbbell tensile properties, and tensile shear strength in the same manner as in Example 2. The results are shown in Table 6.

### (Example 10)

A curable composition was obtained in the same manner as in Example 9, except that 60 parts by weight of the polyoxyalkylene polymer (E-1) and 40 parts by weight of the polyoxyalkylene polymer (E'-5) were replaced by 100 parts by weight of the polyoxyalkylene polymer (E-1). The obtained curable composition was used to evaluate skinning time, dumbbell tensile properties, and tensile shear strength in the same manner as in Example 9. The results are shown in Table 6.

### (Comparative Example 14)

A curable composition was obtained in the same manner as in Example 9, except that 60 parts by weight of the polyoxyalkylene polymer (E-1) was replaced by 60 parts by weight of the polyoxyalkylene polymer (E'-2) obtained in Comparative Example 2. The obtained curable composition was used to evaluate skinning time, dumbbell tensile properties, and tensile shear strength in the same manner as in Example 9. The results are shown in Table 6.

### (Comparative Example 15)

A curable composition was obtained in the same manner as in Example 9, except that 60 parts by weight of the polyoxyalkylene polymer (E-1) and 40 parts by weight of the polyoxyalkylene polymer (E'-5) were replaced by 100 parts by weight of the polyoxyalkylene polymer (E'-2). The obtained curable composition was used to evaluate skinning time, dumbbell tensile properties, and tensile shear strength in the same manner as in Example 9. The results are shown in Table 6.

**[Table 6]**

| | | | Ex. 9 | Ex. 10 | Comp. 14 | Comp. 15 |
|---|---|---|---|---|---|---|
| Hydrolyzable silyl group-containing polymer | | | E-1 | E-1 | E'-2 | E'-2 |
| Allyl group-containing polymer (C) as starting material | | | C-1 | C-1 | - | - |
| Methallyl group-containing polymer (G) as starting material | | | - | - | G-1 | G-1 |
| Hydrolyzable silyl group-containing polymer | | E-1 | 60 | 100 | | |
| | | E'-2 | | | 60 | 100 |
| | | E'-5 | 40 | | 40 | |
| Plasticizer | | DINP | 90 | 90 | 90 | 90 |
| Filler | | Hakuenka CCR | 160 | 160 | 160 | 160 |
| | | Whiton SB | 54 | 54 | 54 | 54 |
| Titanium oxide | | Tipeque R820 | 5 | 5 | 5 | 5 |
| Thixotropic agent | | Disparlon #6500 | 2 | 2 | 2 | 2 |
| Ultraviolet absorber | | Tinuvin 326 | 1 | 1 | 1 | 1 |
| Light stabilizer | | Tinuvin 770 | 1 | 1 | 1 | 1 |
| Dehydrating agent | | A-171 | 3 | 3 | 3 | 3 |
| Adhesion promoter | | A-1120 | 3 | 3 | 3 | 3 |
| Curing catalyst | | U-220H | 2 | 2 | 2 | 2 |
| Skinning time (min) | | | 63 | 18 | 267 | 91 |
| Dumbbell tensile properties | | M50 (MPa) | 0.12 | 0.53 | 0.14 | 0.50 |
| | | M100 (MPa) | 0.22 | 0.80 | 0.14 | 0.77 |
| | | TB (MPa) | 1.00 | 2.86 | 0.99 | 2.85 |
| | | EB (%) | 869 | 918 | 823 | 890 |
| Tensile shear strength | 23°C, 1 hr | TB (MPa) | 0.08 | 1.97 | 0.01 | 0.18 |
| | | Strength achievement rate | 5% | 53% | 1% | 5% |
| | 23°C, 3 hr | TB (MPa) | 0.54 | 1.63 | 0.05 | 0.94 |
| | | Strength achievement rate | 33% | 46% | 4% | 32% |
| | 23°C, 24 hr | TB (MPa) | 1.62 | 3.58 | 1.16 | 2.96 |
| | | Strength achievement rate | 101% | 97% | 70% | 77% |
| | 23°C, 3d + 50°C, 4d | TB (MPa) | 1.60 | 3.70 | 1.65 | 3.86 |

Table 6 reveals that the curable compositions of Examples 9 and 10, each of which contained a polyoxyalkylene polymer (E), exhibited shorter skinning time and better curability than those of Comparative Examples 14 and 15. In particular, it is seen that the curable composition of Example 9, which contained a combination of the polyoxyalkylene polymer (E) and a polyoxyalkylene polymer (E'), exhibited good curability and afforded a cured product with low modulus. It is also evident that the increase in tensile shear strength over time was sharper in Example 9 than in Comparative Example 14 where the modulus of the cured product was similar to that in Example 9.

### (Example 11)

A curable composition was obtained in the same manner as in Example 9, except that 60 parts by weight of the polyoxyalkylene polymer (E-1) was replaced by 60 parts by weight of the polyoxyalkylene polymer (E-2). The obtained curable composition was used to evaluate skinning time, dumbbell tensile properties, and tensile shear strength in the same manner as in Example 9. It should be noted that the tensile shear strength testing after 3 hours at 23°C was not performed. The results are shown in Table 7.

### (Example 12)

A curable composition was obtained in the same manner as in Example 10, except that 100 parts by weight of the polyoxyalkylene polymer (E-1) was replaced by 100 parts by weight of the polyoxyalkylene polymer (E-2). The obtained curable composition was used to evaluate skinning time, dumbbell tensile properties, and tensile shear strength in the same manner as in Example 11. The results are shown in Table 7.

### (Comparative Example 16)

A curable composition was obtained in the same manner as in Example 9, except that 60 parts by weight of the polyoxyalkylene polymer (E-1) was replaced by 60 parts by weight of the polyoxyalkylene polymer (E'-4). The obtained curable composition was used to evaluate skinning time, dumbbell tensile properties, and tensile shear strength in the same manner as in Example 11. The results are shown in Table 7.

### (Comparative Example 17)

A curable composition was obtained in the same manner as in Example 10, except that 100 parts by weight of the polyoxyalkylene polymer (E-1) was replaced by 100 parts by weight of the polyoxyalkylene polymer (E'-4). The obtained curable composition was used to evaluate skinning time, dumbbell tensile properties, and tensile shear strength in the same manner as in Example 11. The results are shown in Table 7.

**[Table 7]**

| | | | Ex. 11 | Ex. 12 | Comp. 16 | Comp. 17 |
|---|---|---|---|---|---|---|
| Hydrolyzable silyl group-containing polymer | | | E-2 | E-2 | E'-4 | E'-4 |
| Allyl group-containing polymer (C) as starting material | | | C-2 | C-2 | - | - |
| Methallyl group-containing polymer (G) as starting material | | | - | - | G-2 | G-2 |
| Hydrolyzable silyl group-containing polymer | | E-2 | 60 | 100 | | |
| | | E'-4 | | | 60 | 100 |
| | | E'-5 | 40 | | 40 | |
| Plasticizer | | DINP | 90 | 90 | 90 | 90 |
| Filler | | Hakuenka CCR | 160 | 160 | 160 | 160 |
| | | Whiton SB | 54 | 54 | 54 | 54 |
| Titanium oxide | | Tipeque R820 | 5 | 5 | 5 | 5 |
| Thixotropic agent | | Disparlon #6500 | 2 | 2 | 2 | 2 |
| Ultraviolet absorber | | Tinuvin 326 | 1 | 1 | 1 | 1 |
| Light stabilizer | | Tinuvin 770 | 1 | 1 | 1 | 1 |
| Dehydrating agent | | A-171 | 3 | 3 | 3 | 3 |
| Adhesion promoter | | A-1120 | 3 | 3 | 3 | 3 |
| Curing catalyst | | U-220H | 2 | 2 | 2 | 2 |
| Skinning time (min) | | | 19 | 9 | 124 | 37 |
| Dumbbell tensile properties | | M50 (MPa) | 0.35 | 0.84 | 0.36 | 0.88 |
| | | M100 (MPa) | 0.61 | 1.18 | 0.61 | 1.24 |
| | | TB (MPa) | 1.65 | 1.96 | 1.63 | 2.01 |
| | | EB (%) | 670 | 368 | 678 | 354 |
| Tensile shear strength | 23°C, 1 hr | TB (MPa) | 0.72 | 1.11 | 0.02 | 0.84 |
| | | Strength achievement rate | 30% | 31% | 1% | 26% |
| | 23°C, 24 hr | TB (MPa) | 2.18 | 2.45 | 1.92 | 2.21 |
| | | Strength achievement rate | 90% | 68% | 78% | 67% |
| | 23°C, 3d + 50°C, 4d | TB (MPa) | 2.42 | 3.58 | 2.45 | 3.28 |

Table 7 reveals that the curable compositions of Examples 11 and 12, each of which contained a polyoxyalkylene polymer (E), exhibited shorter skinning time and better curability than those of Comparative Examples 16 and 17. In particular, it is seen that the curable composition of Example 11, which contained a combination of the polyoxyalkylene polymer (E) and a polyoxyalkylene polymer (E'), exhibited good curability and afforded a cured product with low modulus. It is also evident that the increase in tensile shear strength over time was sharper in Example 11 than in Comparative Example 16 where the modulus of the cured product was similar to that in Example 11.

### (Synthesis Example 5)

Propylene oxide was polymerized using polyoxypropylene glycol having a number-average molecular weight of about 4,500 as an initiator in the presence of a zinc hexacyanocobaltate-glyme complex catalyst. This polymerization yielded a linear hydroxy group-containing polyoxyalkylene polymer (F-5) terminated at both ends with hydroxy groups and having a number-average molecular weight of 13,700.

To the polymer (F-5) was added a 28% methanol solution of sodium methoxide the amount of which was 1.1 molar equivalents per molar equivalent of the hydroxy groups of the polymer (F-5). After methanol was distilled off under reduced pressure from the resulting mixture, allyl chloride was added in an amount of 1.3 molar equivalents per molar equivalents of the hydroxy groups of the polymer (F-5), and the reaction was allowed to proceed at 130°C for 1 hour. Allyl chloride remaining unreacted was then distilled off under reduced pressure from the reaction solution. The resulting unpurified allyl group-containing polyoxypropylene polymer was mixed and stirred with n-hexane and water, and the mixture was centrifuged to remove water. Hexane was distilled off under reduced pressure from the resulting hexane solution, removing metal salts from the polymer. In this manner, a linear allyl group-containing polyoxyalkylene polymer (C-4) was obtained.

To the polymer (C-4) were added a commercially-available Karstedt catalyst the amount of which was 50 ppm by weight based on the weight of the polymer (C-4) and dimethoxymethylsilane the amount of which was 0.74 molar equivalents per molar equivalent of the allyl groups of the polymer (C-4). Hydrosilylation of the allyl groups of the polymer (C-4) with dimethoxymethylsilane was carried out at 90°C. ¹H NMR spectroscopy was performed every hour from the start of the reaction, and complete consumption of the allyl groups of the polymer (C-4) was confirmed 2 hours after the start of the reaction. Volatile components were then distilled off under reduced pressure from the mixture, giving a linear polyoxyalkylene polymer (E'-6) having a hydrolyzable silyl group.

The obtained polymer (E'-6) was analyzed by ¹H NMR spectroscopy to determine the proportions of the numbers of hydrolyzable silyl, 1-propenyl, propyl, and allyl groups relative to the total number of these groups.

The result was that the proportion of hydrolyzable silyl group-containing structures represented by the formula (1) was 74%, while the proportions of I-propenyl, propyl, and allyl groups were 17%, 0%, and 9%, respectively.

### (Example 13)

A curable composition was obtained in the same manner as in Example 9, except that the amount of the polyoxyalkylene polymer (E-1) was changed to 50 parts by weight and the amount of the polyoxyalkylene polymer (E'-5) was changed to 50 parts by weight. The obtained curable composition was used to evaluate skinning time, dumbbell tensile properties, and tensile shear strength in the same manner as in Example 9. It should be noted that the tensile shear strength testing after 3 hours at 23°C was not performed. The results are shown in Table 8.

Table 8 includes the results of Example 10 and Comparative Example 15 for comparison purposes.

**[Table 8]**

| | | | Ex. 13 | Ex. 10 | Comp. 15 |
|---|---|---|---|---|---|
| Hydrolyzable silyl group-containing polymer | | | E-1 | E-1 | E'-2 |
| Allyl group-containing polymer (C) as starting material | | | C-1 | C-1 | - |
| Methallyl group-containing polymer (G) as starting material | | | - | - | G-1 |
| Hydrolyzable silyl group-containing polymer | | E-1 | 50 | 100 | |
| | | E'-2 | | | 100 |
| | | E'-6 | 50 | | |
| Plasticizer | | DINP | 90 | 90 | 90 |
| Filler | | Hakuenka CCR | 160 | 160 | 160 |
| | | Whiton SB | 54 | 54 | 54 |
| Titanium oxide | | Tipeque R820 | 5 | 5 | 5 |
| Thixotropic agent | | Disparlon #6500 | 2 | 2 | 2 |
| Ultraviolet absorber | | Tinuvin 326 | 1 | 1 | 1 |
| Light stabilizer | | Tinuvin 770 | 1 | 1 | 1 |
| Dehydrating agent | | A-171 | 3 | 3 | 3 |
| Adhesion promoter | | A-1120 | 3 | 3 | 3 |
| Curing catalyst | | U-220H | 2 | 2 | 2 |
| Skinning time (min) | | | 20 | 18 | 91 |
| Dumbbell tensile properties | | M50 (MPa) | 0.41 | 0.53 | 0.50 |
| | | M100 (MPa) | 0.66 | 0.80 | 0.77 |
| | | TB (MPa) | 2.19 | 2.86 | 2.85 |
| | | EB (%) | 853 | 918 | 890 |
| Tensile shear strength | 23°C, 1 hr | TB (MPa) | 0.76 | 1.97 | 0.18 |
| | | Strength achievement rate | 28% | 53% | 5% |
| | 23°C, 3 hr | TB (MPa) | 1.29 | 1.63 | 0.94 |
| | | Strength achievement rate | 47% | 46% | 32% |
| | 23°C, 24 hr | TB (MPa) | 2.72 | 3.58 | 2.96 |
| | | Strength achievement rate | 99% | 97% | 77% |
| | 23°C, 3d + 50°C, 4d | TB (MPa) | 2.75 | 3.70 | 3.86 |

Table 8 reveals that the curable composition of Example 13, which contained a combination of a polyoxyalkylene polymer (E) and a polyoxyalkylene polymer (E'), exhibited good curability and low modulus.

## Claims

1. A polyoxyalkylene polymer (E) comprising a polyoxyalkylene polymer molecule having a hydrolyzable silyl group-containing structure represented by the following formula (1): 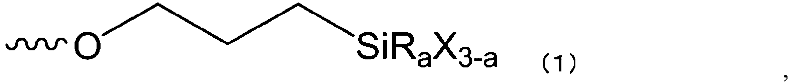 wherein R groups are the same or different and are each a substituted or unsubstituted monovalent hydrocarbon group having 1 to 20 carbon atoms, X groups are the same or different and are each a hydroxy group or a hydrolyzable group, and a is 0, 1, or 2, wherein
the proportion of the number of the hydrolyzable silyl group-containing structures represented by the formula (1), as measured relative to the total number of hydrolyzable silyl groups, I-propenyl groups, propyl groups, and allyl groups in the polymer, is from 0.85 to 1.00, and
the polymer has a number-average molecular weight of more than 3,000.

2. The polyoxyalkylene polymer (E) according to claim 1, wherein the proportion of the number of the hydrolyzable silyl group-containing structures represented by the formula (1), as measured relative to the total number of hydrolyzable silyl groups, I-propenyl groups, propyl groups, and allyl groups in the polymer, is from 0.90 to 1.00.

3. The polyoxyalkylene polymer (E) according to claim 1 or 2, wherein the hydrolyzable silyl groups, the I-propenyl groups, and the propyl groups are groups derived from allyl groups during hydrosilylation.

4. The polyoxyalkylene polymer (E) according to claim 1 or 2, wherein the number-average molecular weight of the polymer is 10,000 or more.

5. The polyoxyalkylene polymer (E) according to claim 4, wherein the number-average molecular weight of the polymer is 20,000 or more.

6. A polymer mixture comprising the polyoxyalkylene polymer (E) according to claim 1 and a ruthenium complex (A).

7. The polymer mixture according to claim 6, wherein
the ruthenium complex (A) comprises a compound (B) as a ligand,
the compound (B) comprises at least one carbon-carbon double bond per molecule, and comprises an electron-withdrawing group bonded to at least one of carbon atoms forming the carbon-carbon double bond.

8. The polymer mixture according to claim 7, wherein the compound (B) comprises a benzene ring skeleton as a skeleton comprising the carbon-carbon double bond.

9. The polymer mixture according to claim 7, wherein the compound (B) comprises a norbornadiene skeleton as a skeleton comprising the carbon-carbon double bond.

10. The polymer mixture according to any one of claims 7 to 9, wherein the electron-withdrawing group is at least one group selected from the group consisting of fluoro, bromo, and iodo groups.

11. A curable composition comprising the polyoxyalkylene polymer (E) according to claim 1 or the polymer mixture according to claim 6.

12. The curable composition according to claim 11, further comprising a reinforcing filler.

13. The curable composition according to claim 11, further comprising a plasticizer, a filler, and a curing catalyst, wherein
the proportion of the polyoxyalkylene polymer (E) to the total amount of components other than the curing catalyst in the curable composition is from 5 to 20 wt%,
the proportion of the plasticizer to the total amount of the components other than the curing catalyst in the curable composition is from 5 to 65 wt%,
the proportion of the filler to the total amount of the components other than the curing catalyst in the curable composition is from 15 to 90 wt%, and
the total proportion of the polyoxyalkylene polymer (E), the plasticizer, and the filler to the total amount of the components other than the curing catalyst in the curable composition is from 80 to 100 wt%.

14. The curable composition according to claim 11, further comprising a polyoxyalkylene polymer (E') comprising a polyoxyalkylene polymer molecule having a hydrolyzable silyl group-containing structure represented by the formula (1), wherein
in the polymer (E'), the proportion of the number of the hydrolyzable silyl group-containing structures represented by the formula (1), as measured relative to the total number of hydrolyzable silyl groups, I-propenyl groups, propyl groups, and allyl groups in the polymer (E'), is from 0.05 to less than 0.85.

15. The curable composition according to claim 14, wherein
the polyoxyalkylene polymer (E) has a number-average molecular weight of 20,000 to 100,000, and
the polyoxyalkylene polymer (E') has a number-average molecular weight of 800 to less than 20,000.

16. The curable composition according to claim 14, wherein the polyoxyalkylene polymer (E) comprises a branched main chain.

17. The curable composition according to claim 14, wherein
the polyoxyalkylene polymer (E') comprises a linear main chain, and
the polyoxyalkylene polymer (E') comprises the hydrolyzable silyl group-containing structure at only one end of the linear main chain.

18. The curable composition according to claim 11, further comprising an epoxy compound.

19. The curable composition according to claim 18, further comprising an epoxy-curing agent.

20. A cured product obtained by curing the curable composition according to claim 11.
